# EUROPEAN PATENT APPLICATION

(11) **EP 4 596 275 A1**
(43) Date of publication of application: **06.08.2025**
(21) Application number: 23871079.2
(22) Date of filing: 28.09.2023
(51) Int. Cl.: B60H 1/00, H01M 10/00

(54) **THERMAL MANAGEMENT SYSTEM AND VEHICLE HAVING SAME**

(30) Priority: 29.09.2022 CN 202211204910
(71) Applicant: BYD Company Limited, Shenzhen, Guangdong 518118 (CN)
(72) Inventor: LING, Heping, Shenzhen, Guangdong 518118 (CN); HUANG, Wei, Shenzhen, Guangdong 518118 (CN); MA, Rui, Shenzhen, Guangdong 518118 (CN); ZHENG, Fuwei, Shenzhen, Guangdong 518118 (CN); LUO, Yili, Shenzhen, Guangdong 518118 (CN)
(74) Representative: Mathys & Squire
(86) International application number: PCT/CN2023/122865
(87) International publication number: WO 2024/067855

(57) **Abstract**

A thermal management system, comprising: a battery thermal management subsystem which comprises a first trunk line and a second trunk line, the first trunk line being used for exchanging heat with a first area of a battery, the second trunk line is used for exchanging heat with a second area of the battery, the first area and the second area being different, and at least one of the first trunk line and the second trunk line exchanging heat with the battery; and a heat exchange unit which is arranged on the battery thermal management subsystem and a power thermal management subsystem, wherein the battery thermal management subsystem and the power thermal management subsystem exchange heat by means of the heat exchange unit, and the power thermal management subsystem is used for heat dissipation of electronic modules.

## Description

### CROSS-REFERENCE TO RELATED APPLICATIONS

The present disclosure is proposed based on and claims priority to Chinese Patent Application No. 2022112049102, filed on September 29, 2022. The entire content of the above-referenced application is incorporated herein by reference.

### FIELD

The disclosure relates to the field of vehicles, and in particular, to a thermal management system and a vehicle having the same.

### BACKGROUND

In an existing heat pump system architecture for thermal management of a whole vehicle, a thermal management system is not functionally diversified, heat exchange of a battery module often fails meet a battery temperature, energy loss is large, and working efficiency of the thermal management system is low.

### SUMMARY

The present disclosure aims to resolve at least one of the technical problems in the related art. Therefore, the present disclosure provides a thermal management system, to reduce the energy consumption of the thermal management system and improve functionality of the thermal management system.

The present disclosure further provides a vehicle having the foregoing thermal management system.

The thermal management system according to embodiments of the present disclosure includes: a battery thermal management subsystem, the battery thermal management subsystem including a first trunk line and a second trunk line, the first trunk line being configured to exchange heat with a first region of a battery, the second trunk line being configured to exchange heat with a second region of the battery, the first region and the second region being different, and at least one of the first trunk line and the second trunk line exchanging heat with the battery; and a heat exchange unit, the heat exchange unit being arranged at the battery thermal management subsystem and a power thermal management subsystem, the battery thermal management subsystem and the power thermal management subsystem exchanging heat through the heat exchange unit, and the power thermal management subsystem being configured to dissipate heat for an electronic module.

In the thermal management system according to the embodiments of the present disclosure, the battery thermal management subsystem can exchange heat with the battery with different efficiency or in different thermal management modes, so that energy consumption of the thermal management system can be reduced, functionality of the thermal management system can be improved, excess heat can be further recovered, and energy consumption can be further reduced.

According to some embodiments of the present disclosure, a temperature of the first region is higher than a temperature of the second region; or a temperature rise rate of the first region is higher than a temperature rise rate of the second region; or the first region is an electrode region of the battery.

According to some embodiments of the present disclosure, the heat exchange unit includes at least one heat exchanger, each heat exchanger includes a first flow channel and a second flow channel that exchange heat with each other, the first flow channel is arranged in the power thermal management subsystem, and the second flow channel is connected to at least one of the first trunk line and the second trunk line.

According to some embodiments of the present disclosure, the thermal management system further includes a compressor and an out-vehicle condenser, an exhaust port of the compressor is connected to a first end of the out-vehicle condenser, a second end of the out-vehicle condenser is connected to an air inlet of the compressor through the first trunk line, and the second end of the out-vehicle condenser is connected to the air inlet of the compressor through the second trunk line; and the exhaust port of the compressor being connected to the air inlet of the compressor through the first trunk line, and the exhaust port of the compressor being connected to the air inlet of the compressor through the second trunk line.

According to some embodiments of the present disclosure, the first trunk line is provided with a first heat exchange unit, a first flow regulating element, and a second flow regulating element, the first flow regulating element is connected to a first end of the first heat exchange unit, the second flow regulating element is connected to a second end of the first heat exchange unit, and the first heat exchange unit is configured to exchange heat with the first region; and

the second trunk line is provided with a second heat exchange unit, a third flow regulating element, and a fourth flow regulating element, the third flow regulating element is connected to a first end of the second heat exchange unit, the fourth flow regulating element is connected to a second end of the second heat exchange unit, and the second heat exchange unit is configured to exchange heat with the second region.

In some embodiments of the present disclosure, an opening degree of at least one of the first flow regulating element, the second flow regulating element, the third flow regulating element, and the fourth flow regulating element is different, to cause heat exchange amounts of the first trunk line and the second trunk line to be different.

In some embodiments of the present disclosure, when a temperature of the first region is higher than a temperature of the second region, a temperature difference is greater than or equal to a first threshold, and a cooling instruction is received, an opening degree of the first flow regulating element is adjusted according to a superheating degree △TA of the second end of the first heat exchange unit, and an opening degree of the third flow regulating element is reduced at set time intervals.

In some embodiments of the present disclosure, the opening degree of the first flow regulating element is reduced when ΔTA < ΔTC; the opening degree of the first flow regulating element is increased when ΔTA > ΔTD; or the first flow regulating element maintains the current opening degree when △TD≤△TA≤△TC.

In some embodiments of the present disclosure, when a temperature of the first region is higher than a temperature of the second region, a temperature difference is greater than or equal to a first threshold, and a cooling instruction is received, opening degrees of the second flow regulating element and the fourth flow regulating element are maximum.

In some embodiments of the present disclosure, when a temperature of the first region is higher than a temperature of the second region, a temperature difference is greater than or equal to a second threshold, and a heating instruction is received, an opening degree of the fourth flow regulating element is maximum, and an opening degree of the second flow regulating element is reduced at set time intervals.

In some embodiments of the present disclosure, when a temperature of the first region is higher than a temperature of the second region, a temperature difference is greater than or equal to a second threshold, and a heating instruction is received, an opening degree of the first flow regulating element is adjusted according to a supercooling degree ΔT1 of the first end of the first heat exchange unit, and an opening degree of the third flow regulating element is adjusted according to a supercooling degree ΔT2 of the first end of the second heat exchange unit.

In some embodiments of the present disclosure, the opening degree of the first flow regulating element is reduced when △T1<△T3; the opening degree of the first flow regulating element is increased when ΔTA > ΔT4; or the first flow regulating element maintains the current opening degree when △T4≤△TA≤△T3; and

the opening degree of the third flow regulating element is reduced when △T2<△T5; the opening degree of the third flow regulating element is increased when △T2<△T6; or the third flow regulating element maintains the current opening degree when △T6≤△T2≤△T5.

In some embodiments of the present disclosure, the power thermal management subsystem includes at least one of a high-pressure thermal management subsystem and an engine thermal management subsystem, the high-pressure thermal management subsystem is configured to perform heat exchange for a motor and/or an electric control, and the engine thermal management subsystem is configured to perform heat exchange for an engine.

In some embodiments of the present disclosure, the high-pressure thermal management subsystem includes a first heat spreader, and the first heat spreader and the heat exchange unit are connected to form a first coolant circuit; and/or the engine thermal management subsystem includes a second heat spreader, and the second heat spreader and the heat exchange unit are connected to form a second coolant circuit.

In some embodiments of the present disclosure, the thermal management system further includes an air conditioning subsystem, the air conditioning subsystem including a compressor, an in-vehicle condenser, an out-vehicle condenser, and an evaporator, an exhaust port of the compressor being connected to a first end of the in-vehicle condenser, a second end of the in-vehicle condenser being connected to a first end of the out-vehicle condenser, and two ends of the evaporator being respectively connected to a second end of the out-vehicle condenser and an air inlet of the compressor; and the first trunk line and the second trunk line being connected in parallel, and the first trunk line being connected between the second end of the out-vehicle condenser and the air inlet.

The vehicle according to the embodiments of the present disclosure includes the thermal management system according to the foregoing embodiments.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the disclosure will become apparent and comprehensible in the description of the embodiments made with reference to the following accompanying drawings.
FIG. 1 is a schematic structural diagram of a thermal management system according to an embodiment of the present disclosure;
FIG. 2 is a schematic structural diagram of a thermal management system and a power thermal management subsystem according to an embodiment of the present disclosure;
FIG. 3 is a schematic diagram of a first implementation of a battery core according to the present disclosure;
FIG. 4 is a schematic diagram of a second implementation of a battery core according to the present disclosure;
FIG. 5 is a schematic diagram of a first implementation of a battery pack according to the present disclosure;
FIG. 6 is a schematic diagram of a second implementation of a battery pack according to the present disclosure;
FIG. 7 is a schematic diagram of a thermal management system according to some embodiments of the present disclosure; and
FIG. 8 is a schematic diagram of a vehicle according to some embodiments of the present disclosure.

In the drawings:
vehicle 1000,
thermal management system 100, power thermal management subsystem 200, high-pressure thermal management subsystem 201, engine thermal management subsystem 202, battery 300, battery core 301, non-electrode heating temperature region 301a, electrode heating temperature region 301b,
air conditioning circulation circuit 101, coolant circulation system 102,
first trunk line 10a, second trunk line 10b, first exhaust flow channel 10c, second exhaust flow channel 10d, third exhaust flow channel 10e, bypass flow path 10f, series branch 10g,
compressor 11, first heat exchanger 12, in-vehicle condenser 120, second heat exchanger 13, out-vehicle condenser 130, third heat exchanger 14, evaporator 140, gas-liquid separator 15,
first heat exchange unit 21, second heat exchange unit 22,
first sensor 31, second sensor 32, third sensor 33, fourth sensor 34, fifth sensor 35,
first one-way valve 41, second one-way valve 42, third one-way valve 43, fourth one-way valve 44, fifth one-way valve 45,
first on-off valve 51, second on-off valve 52, third on-off valve 53, fourth on-off valve 54, fifth on-off valve 55, sixth on-off valve 56, series switch valve 57, parallel switch valve 58,
first electronic expansion valve (first flow regulating element) 61, second electronic expansion valve (second flow regulating element) 62, third electronic expansion valve 63, fourth electronic expansion valve 64, third flow regulating element 65, fourth flow regulating element 66,
fourth heat exchanger 71, charging and power distribution/motor assembly 72, first heat spreader 73, switching valve group 74, water pump 75, fifth heat exchanger 76, engine assembly 77, second heat spreader 78,
first pressure sensor 81, and first temperature sensor 82.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments that are described with reference to the accompany drawings are exemplary, and are only used to interpret the present disclosure, instead limiting the present disclosure.

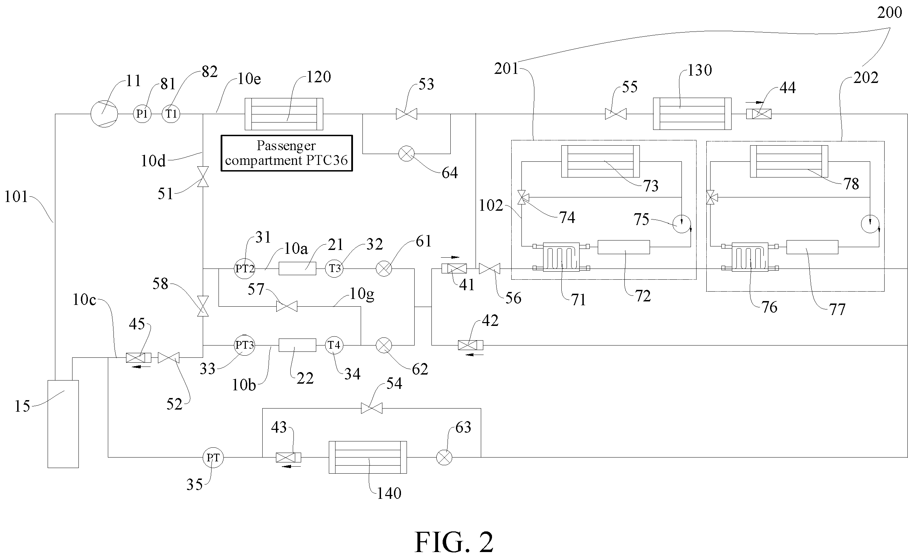

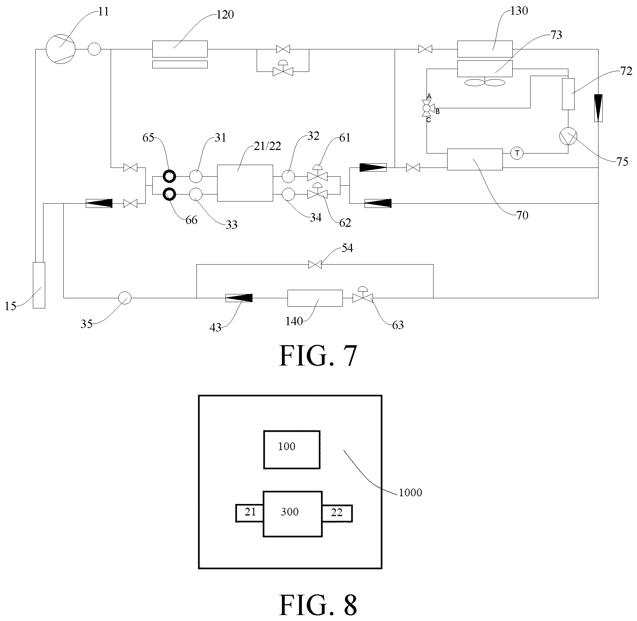

A thermal management system 100 according to the embodiments of the present disclosure will be described below with reference to FIG. 2 and FIG. 7.

The thermal management system 100 according to the embodiments of the present disclosure includes: a battery thermal management subsystem and a heat exchange unit. The battery thermal management subsystem includes a first trunk line 10a and a second trunk line 10b, the first trunk line 10a is configured to exchange heat with a first region of a battery 300, the second trunk line 10b is configured to exchange heat with a second region of the battery 300, the first region and the second region being different, and at least one of the first trunk line 10a and the second trunk line 10b exchange heat with the battery 300. Specifically, when the thermal management system 100 needs to cool or heat the battery 300, both the first trunk line 10a and the second trunk line 10b may exchange heat with the battery 300, or one of the first trunk line 10a and the second trunk line 10b may exchange heat with the battery 300. Therefore, based on different heat exchange requirements, the battery thermal management subsystem may exchange heat with the battery 300 with different efficiency or in different thermal management modes, thereby reducing energy consumption of the thermal management system 100 and improving functionality of the thermal management system 100.

The heat exchange unit is arranged at the battery thermal management subsystem and a power thermal management subsystem 200, the battery thermal management subsystem and the power thermal management subsystem 200 exchange heat through the heat exchange unit, and the power thermal management subsystem 200 is configured to dissipate heat for an electronic module.

Specifically, the heat exchange unit has one part belonging to the battery thermal management subsystem and the other part belonging to the power thermal management subsystem 200. The power thermal management subsystem 200 is configured to dissipate heat for an electronic module. The electronic module includes, but is not limited to, a motor, an engine, and other components of a vehicle that need to dissipate heat. Energy in the battery thermal management subsystem and energy in the power thermal management subsystem 200 implement heat exchange at a position of the heat exchange unit, so that excess heat of the power thermal management subsystem 200 can be recovered.

In the thermal management system 100 according to the embodiments of the present disclosure, the battery thermal management subsystem can exchange heat with the battery 300 with different efficiency or in different thermal management modes, so that energy consumption of the thermal management system 100 can be reduced, functionality of the thermal management system 100 can be improved, excess heat can be further recovered, and energy consumption can be further reduced.

In some embodiments of the present disclosure, a temperature of the first region is higher than a temperature of the second region; or a temperature rise rate of the first region is higher than a temperature rise rate of the second region; or the first region is an electrode region of the battery 300, and the second region is a non-electrode region of the battery 300. Therefore, the first trunk line 10a and the second trunk line 10b may be used to implement independent heat exchange between the first region and the second region, to implement partitioned temperature control. For example, a heat exchange amount of the first trunk line 10a may be greater than a heat exchange amount of the second trunk line 10b, or a temperature of a heat exchange medium in the first trunk line 10a may be lower than a temperature of a heat exchange medium in the second trunk line 10b during cooling, so that a temperature drop speed of the first region is higher, thereby implementing temperature uniformity of the battery 300.

It may be understood that, in the battery 300, there is mixing of battery modules with different rate performance, for example, mixing of a power-type module and an energy-type module, or mixing of battery modules with different material systems, for example, mixing of a sodium-battery module and a lithium-battery module. In addition, there may also be a same type of battery core, but the modules are divided according to functional design requirements. For example, charging and discharging currents between the modules are different, and charging and discharging heat generation of different battery modules is different. As a result, the battery has a first region and a second region with different temperatures or different temperature rise rates.

It may be further understood that there is a difference in heat exchange between the battery 300 and the environment. Generally, an edge region of the battery 300 exchanges heat efficiently with the environment and is greatly affected by the environment, and a center region of the battery 300 exchanges heat poorly with the environment and is little affected by the environment. Therefore, there is a case that the first region and the second region have different temperatures. It should be noted that the foregoing descriptions are merely exemplary descriptions of the occurrence of the temperature difference between the first region and the second region, but are not restrictive descriptions.

In some embodiments of the present disclosure, the heat exchange unit includes at least one heat exchanger 70, each heat exchanger 70 includes a first flow channel and a second flow channel that exchange heat with each other, the first flow channel is arranged in the power thermal management subsystem 200, and the second flow channel is connected to at least one of the first trunk line 10a and the second trunk line 10b. Therefore, heat exchange between the battery thermal management subsystem and the power thermal management subsystem 200 is implemented by using the heat exchanger 70 in which the first flow channel and the second flow channel that exchange heat with each other are arranged, so that the structure of the thermal management system 100 is simple. Certainly, it may be understood that a manner of implementing heat exchange between the battery thermal management subsystem and the power thermal management subsystem 200 is not limited thereto. For example, a first heat exchange tube may be connected in series in one of the power thermal management subsystem 200 and the battery thermal management subsystem, and a second heat exchange tube may be connected in series in the other of the power thermal management subsystem 200 and the battery thermal management subsystem. Heat exchange is implemented by using the first heat exchange tube and the second heat exchange tube that are independently arranged.

As shown in FIG. 2, in some embodiments of the present disclosure, the power thermal management subsystem 200 includes at least one of a high-pressure thermal management subsystem 201 and an engine thermal management subsystem 202, the high-pressure thermal management subsystem 201 is configured to perform heat exchange for a motor and/or an electric control, and the engine thermal management subsystem 202 is configured to perform heat exchange for an engine. Therefore, heat dissipation of the motor and/or the motor, the engine can be implemented.

Further, as shown in FIG. 2, the high-pressure thermal management subsystem 201 includes a first heat spreader 73, and the first heat spreader 73 and the heat exchange unit are connected to form a first coolant circuit; and/or
the engine thermal management subsystem 202 includes a second heat spreader 78, and the second heat spreader 78 and the heat exchange unit are connected to form a second coolant circuit. Therefore, heat can be dissipated to the external environment by using the first heat spreader 73 and the second heat spreader 78, thereby improving the heat dissipation effect.

In some examples of the present disclosure, the power thermal management subsystem 200 includes a high-pressure thermal management subsystem 201 and an engine thermal management subsystem 202. The heat exchanger 70 includes a fourth heat exchanger 71 and a fifth heat exchanger 76. The first heat spreader 73 and the fourth heat exchanger 71 are connected to form a first coolant circuit, and the second heat spreader 78 and the fifth heat exchanger 76 are connected to form a second coolant circuit. A water pump 75 is arranged in each of the first cooling circuit and the second coolant circuit to circulate a coolant.

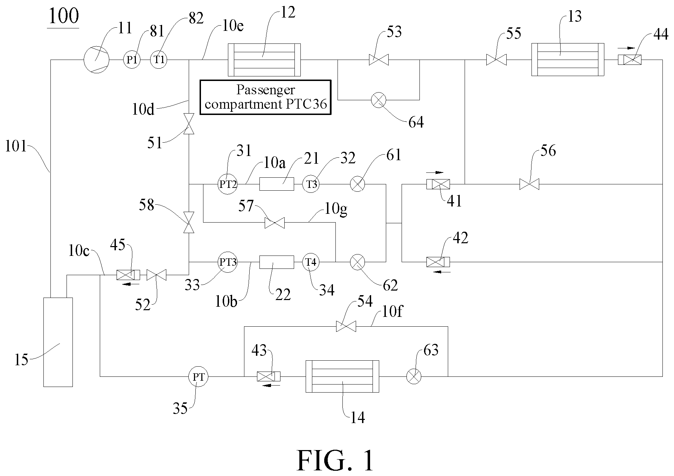

In some embodiments of the present disclosure, as shown in FIG. 1, FIG. 2, and FIG. 7, the thermal management system 100 further includes a compressor 11 and an out-vehicle condenser 130, an exhaust port of the compressor 11 is connected to a first end of the out-vehicle condenser 130, a second end of the out-vehicle condenser 130 is connected to an air inlet of the compressor 11 through the first trunk line 10a, and the second end of the out-vehicle condenser 130 is connected to the air inlet of the compressor 11 through the second trunk line 10b. The exhaust port of the compressor 11 is connected to the air inlet of the compressor 11 through the first trunk line 10a, and the exhaust port of the compressor 11 is connected to the air inlet of the compressor 11 through the second trunk line 10b.

Specifically, when at least one of the first region and the second region of the battery 300 needs to be cooled, a cooling medium discharged from the exhaust port of the compressor 11 flows through the out-vehicle condenser 130 and then flows to at least one of the first trunk line 10a and the second trunk line 10b to cool the battery 300. In other words, in this case, the battery thermal management subsystem functions as an evaporator, and the cooling medium evaporates and absorbs heat in the at least one of the first trunk line 10a and the second trunk line 10b.

When it is necessary to heat at least one of the first region and the second region of the battery 300, the cooling medium discharged from the exhaust port of the compressor 11 flows to at least one of the first trunk line 10a and the second trunk line 10b (that is, in this case, the battery thermal management subsystem functions as a condenser, and the cooling medium is condensed and dissipates heat in the at least one of the first trunk line 10a and the second trunk line 10b), and finally the cooling medium flows back to the exhaust port, thereby heating the at least one of the first region and the second region. It should be noted that, such a case where the cooling medium further needs to be throttled by a throttling element and depressurized during circulation of the cooling medium is well known to a person skilled in the art, and is not described in detail herein.

As shown in FIG. 7, in some embodiments of the present disclosure, the first trunk line 10a is provided with a first heat exchange unit 21, a first flow regulating element 61, and a second flow regulating element 65, the first flow regulating element 61 is connected to a first end of the first heat exchange unit 21, the second flow regulating element 65 is connected to a second end of the first heat exchange unit 21, and the first heat exchange unit 21 is configured to exchange heat with the first region.

the second trunk line 10b is provided with a second heat exchange unit 22, a third flow regulating element 62, and a fourth flow regulating element 66, the third flow regulating element 62 is connected to a first end of the second heat exchange unit 22, the fourth flow regulating element 66 is connected to a second end of the second heat exchange unit 22, and the second heat exchange unit 22 is configured to exchange heat with the second region.

Further, the first flow regulating element 61 is located between the first heat exchange unit 21 and the out-vehicle condenser 130, and the third flow regulating element 62 is located between the second heat exchange unit 22 and the out-vehicle condenser 130. When the battery 300 needs to be cooled, the cooling medium flowing out from the out-vehicle condenser 130 sequentially flows through the first flow regulating element 61, the first heat exchange unit 21, and the second flow regulating element 65, and the cooling medium flowing out from the out-vehicle condenser 130 sequentially flows through the third flow regulating element 62, the second heat exchange unit 22, and the fourth flow regulating element 66. Therefore, by arranging the first flow regulating element 61, the second flow regulating element 65, the third flow regulating element 62, and the fourth flow regulating element 66, the first trunk line 10a and the second trunk line 10b may be independently regulated. For example, the flow of the cooling medium and/or the temperature of the cooling medium in the first heat exchange unit 21 may be regulated by using the first flow regulating element 61 and the second flow regulating element 65, and the flow of the cooling medium and/or the temperature of the cooling medium in the second heat exchange unit 22 may be regulated by using the third flow regulating element 62 and the fourth flow regulating element 66, thereby independently regulating the temperatures of the first region and the second region and achieving the purpose of partitioned control.

Further, an opening degree of at least one of the first flow regulating element 61, the second flow regulating element 65, the third flow regulating element 62, and the fourth flow regulating element 66 is different, to cause heat exchange amounts of the first trunk line 10a and the second trunk line 10b to be different. Specifically, when the temperature of the first region is higher than that of the second region, or the temperature rise rate of the first region is greater than the temperature rise rate of the second region, the heat exchange amount of the first trunk line 10a is greater than the heat exchange amount of the second trunk line 10b during cooling, so that the first region can be preferentially cooled, thereby implementing temperature uniformity of the battery 300. During heating, the heat exchange amount of the first trunk line 10a is less than the heat exchange amount of the second trunk line 10b, so that the second region is preferentially heated.

In some embodiments of the present disclosure, when a temperature of the first region is higher than a temperature of the second region, a temperature difference is greater than or equal to a first threshold, and a cooling instruction is received, an opening degree of the first flow regulating element 61 is adjusted according to a superheating degree △TA of the second end of the first heat exchange unit 21, and an opening degree of the third flow regulating element 62 is reduced at set time intervals. It should be noted that, the cooling instruction may be an operation instruction issued by a user, or an instruction issued by a system when it is detected that the battery 300 needs to be cooled, for example, it is detected that a highest temperature of the battery 300 is greater than a first set temperature.

Specifically, the adjusting the opening degree of the first flow regulating element 61 according to the superheating degree △TA of the second end of the first heat exchange unit 21 can ensure that the flow and/or the temperature of the cooling medium in the first heat exchange unit 21 meets the temperature drop requirement for the first region. By reducing the opening degree of the third flow regulating element 62 at set time intervals, the cooling medium amount of the second heat exchange unit 22 may be reduced, to avoid excessive temperature drop for the second region, and therefore heat exchange amounts of the first trunk line 10a and the second trunk line 10b may be different, thereby implementing temperature uniformity of the battery 300.

Further, the opening degree of the first flow regulating element 61 is reduced when ΔTA < ΔTC; the opening degree of the first flow regulating element 61 is increased when ΔTA > ΔTD; or the first flow regulating element 61 maintains the current opening degree when △TD≤△TA≤△TC. Therefore, it can be ensured that the flow and/or the temperature of the cooling medium in the first heat exchange unit 21 meets the temperature drop effect on the first region, and excessive temperature drop of the first region can be avoided. It should be noted that the values of △TC and △TD may be limited according to an actual situation.

In some embodiments of the present disclosure, the opening degree of the third flow regulating element 62 is reduced at set time intervals. When it is detected that the temperature difference between the first region and the second region is less than the first threshold, the third flow regulating element 62 restores to have the opening degree regulated according to the superheating degree △TB of the second end of the second heat exchange unit 22.

Specifically, the opening degree of the third flow regulating element 62 is reduced when △TB<△TC2; the opening degree of the third flow regulating element 62 is increased when △TB>△TD2; or the third flow regulating element 62 maintains the current opening degree when △TD2≤△TB≤△TC2. It should be noted that the values of △TC2 and △TD2 may be limited according to an actual situation.

In some embodiments of the present disclosure, a first sensor 31 is arranged between the second flow regulating element 65 and the first heat exchange unit 21, a second sensor 32 is arranged between the first flow regulating element 61 and the first heat exchange unit 21, a third sensor 33 is arranged between the fourth flow regulating element 66 and the second heat exchange unit 22, and a fourth sensor 34 is arranged between the third flow regulating element 62 and the second heat exchange unit 22, so that the superheating degree of the second end of the first trunk line 10a may be calculated by using the pressure/temperature detected by the first sensor 31, and the superheating degree of the second end of the second trunk line 10b may be calculated by using the pressure/temperature detected by the third sensor 33.

In some embodiments of the present disclosure, when a temperature of the first region is higher than a temperature of the second region, a temperature difference is greater than or equal to a first threshold, and a cooling instruction is received, opening degrees of the second flow regulating element 65 and the fourth flow regulating element 66 are maximum, thereby reducing flow resistances of the first trunk line 10a and the second trunk line 10b, to ensure a cooling effect.

In some embodiments of the present disclosure, when a temperature of the first region is higher than a temperature of the second region, a temperature difference is less than a first threshold, and a cooling instruction is received, an opening degree of the first flow regulating element 61 is adjusted according to a superheating degree △TA of the second end of the first heat exchange unit 21, and the opening degree of the third flow regulating element 62 is adjusted according to the superheating degree △TB of the second end of the second heat exchange unit 22. The opening degrees of the second flow regulating element 65 and the fourth flow regulating element 66 are maximum. Therefore, a cooling effect can be ensured.

The opening degree of the first flow regulating element 61 is reduced when ΔTA < ΔTC1; the opening degree of the first flow regulating element 61 is increased when ΔTA > ΔTD1; or the first flow regulating element 61 maintains the current opening degree when △TD1≤△TA≤△TC1. It should be noted that the values of △TC1 and △TD1 may be limited according to an actual situation.

the opening degree of the third flow regulating element 62 is reduced when △TB<△TC2; the opening degree of the third flow regulating element 62 is increased when △TB>△TD2; or the third flow regulating element 62 maintains the current opening degree when △TD2≤△TB≤△TC2. It should be noted that the values of △TC2 and △TD2 may be limited according to an actual situation.

In some embodiments of the present disclosure, when a temperature of the first region is higher than a temperature of the second region, a temperature difference is greater than or a second threshold, and a heating instruction is received, an opening degree of the fourth flow regulating element 66 is maximum, and an opening degree of the second flow regulating element 65 is reduced at set time intervals. Therefore, the heat exchange amounts of the second trunk line 10b and the first trunk line 10a may be different, so that the temperature of the cooling medium in the second trunk line 10b is higher than the temperature of the cooling medium in the first trunk line 10a and/or the flow of the cooling medium in the second trunk line 10b is greater than the flow of the cooling medium in the first trunk line 10a, to heat the second region preferentially, thereby implementing temperature uniformity of the battery 300.

Further, the opening degree of the second flow regulating element 65 is reduced at set time intervals. After the temperature difference is less than the second threshold, the opening degree of the second flow regulating element 65 is stopped from being reduced.

It should be noted that, the heating instruction may be an operation instruction issued by a user, or an instruction issued by a system when it is detected that the battery 300 needs to be heated, for example, it is detected that a lowest temperature of the battery 300 is greater than a second set temperature.

In some embodiments of the present disclosure, when a temperature of the first region is higher than a temperature of the second region, a temperature difference is greater than or equal to a second threshold, and a heating instruction is received, an opening degree of the first flow regulating element 61 is adjusted according to a supercooling degree ΔT1 of the first end of the first heat exchange unit 21, and an opening degree of the third flow regulating element 62 is adjusted according to a supercooling degree ΔT2 of the first end of the second heat exchange unit 22. Therefore, the heat exchange amounts of the first heat exchange unit 21 and the second heat exchange unit 22 may be adjusted in real time, thereby ensuring temperature uniformity of the battery 300.

Further, the opening degree of the first flow regulating element 61 is reduced when △T1<△T3; the opening degree of the first flow regulating element 61 is increased when ΔTA > ΔT4; or the first flow regulating element 61 maintains the current opening degree when △T4≤△TA≤△T3; and
the opening degree of the third flow regulating element 62 is reduced when △T2<△T5; the opening degree of the third flow regulating element 62 is increased when △T2<△T6; or the third flow regulating element 62 maintains the current opening degree when △T6≤△T2≤△T5. Therefore, temperature uniformity of the battery 300 can be further ensured. It should be noted that T3, T4, T5, and T6 may be set according to an actual situation.

In some embodiments of the present disclosure, when a temperature of the first region is higher than a temperature of the second region, a temperature difference is less than a second threshold, and a heating instruction is received, opening degrees of the second flow regulating element 65 and the fourth flow regulating element 66 are maximum, an opening degree of the first flow regulating element 61 is adjusted according to a supercooling degree ΔT1 of the first end of the first heat exchange unit 21, and an opening degree of the third flow regulating element 62 is adjusted according to a supercooling degree ΔT2 of the first end of the second heat exchange unit 22. Therefore, the heat exchange amounts of the first heat exchange unit 21 and the second heat exchange unit 22 may be adjusted in real time, thereby ensuring temperature uniformity of the battery 300.

Further, the opening degree of the first flow regulating element 61 is reduced when △T1<△T7; the opening degree of the first flow regulating element 61 is increased when ΔTA > ΔT8; or the first flow regulating element 61 maintains the current opening degree when △T8≤△TA≤△T7; and
the opening degree of the third flow regulating element 62 is reduced when △T2<△T9; the opening degree of the third flow regulating element 62 is increased when △T2<△T10; or the third flow regulating element 62 maintains the current opening degree when △T10≤△T2≤△T9. Therefore, temperature uniformity of the battery 300 can be further ensured. It should be noted that T7, T8, T9, and T10 may be set according to an actual situation.

Further, the supercooling degree ΔT1 of the first trunk line 10a is calculated according to the pressure detected by the first sensor 31 and the temperature detected by the second sensor 32. The supercooling degree ΔT2 of the second trunk line 10b is calculated according to the pressure detected by the third sensor 33 and the temperature detected by the fourth sensor 34, so that a real-time supercooling degree can be obtained.

According to some embodiments of the present disclosure, the thermal management system 100 further includes an air conditioning subsystem. The air conditioning subsystem includes a compressor 11, an in-vehicle condenser 120, an out-vehicle condenser 130, and an evaporator 140, an exhaust port of the compressor 11 is connected to a first end of the in-vehicle condenser 120, a second end of the in-vehicle condenser 120 is connected to a first end of the out-vehicle condenser 130, and two ends of the evaporator 140 are respectively connected to a second end of the out-vehicle condenser 130 and an air inlet of the compressor 11. Therefore, the in-vehicle condenser 120 may be used to heat an environment in the vehicle, and the evaporator 140 may be used to cool the environment in the vehicle.

The first trunk line 10a and the second trunk line 10b are connected in parallel, and the first trunk line 10a is connected between the second end of the out-vehicle condenser 130 and the air inlet. Therefore, the cooling medium flows through the first trunk line 10a and the second trunk line 10b, to cool or heat the battery 300.

In some embodiments of the present disclosure, when the lowest temperature of the battery is ≤ 10°C, at least one of the first trunk line and the second trunk line is controlled to heat the battery. When the lowest temperature of the battery is ≥ 12°C, heating is stopped.

In some embodiments of the present disclosure, when it is determined that the highest temperature of the battery is ≥ 38°C, at least one of the first trunk line and the second trunk line is controlled to cool the battery. When it is determined that the highest temperature of the battery is ≤ 34°C, cooling is stopped.

In some embodiments of the present disclosure, if the temperature rise rate of the first region is ≥ 2.5°C/min, and the temperature rate of the second region is < 2.5°C/min, or the temperature rate of the second region is < 1.5°C/min, it indicates that the temperature rise rates of the first region and the second region are different.

In some embodiments of the present disclosure, when it is determined that the temperature rise rate of the first region is ≥ 2.5°C/min or T_{H}-T_{L} = T₀ and T₀ ≥ 10°C, a partitioned control mode is enabled. When it is determined that the temperature rise rate of the first region is < 1°C/min or T₀ < 10°C, the partitioned control mode is exited.

In some embodiments of the present disclosure, when it is determined that the temperature rise rate of the first region is ≥ 2.5°C/min, and the lowest temperature of the battery is > 10°C, a cooling partitioned control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that T₀ ≥ 10°C and the lowest temperature of the battery is > 10°C, a cooling partitioned control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that the temperature rise rate of the first region is ≥ 2.5°C/min, and the lowest temperature of the battery is < 10°C, a heating partitioned control mode is controlled to be entered, the second region is controlled to be preferentially heated, and the heat exchange amount of the second trunk line is controlled to be greater than the heat exchange amount of the first trunk line.

In some embodiments of the present disclosure, when it is determined that T₀ ≥ 10°C and the lowest temperature of the battery is < 10°C, a heating partitioned control is controlled to be entered, the second region is controlled to be preferentially heated, and the heat exchange amount of the second trunk line is controlled to be greater than the heat exchange amount of the first trunk line.

In some embodiments of the present disclosure, when it is determined that the highest temperature of the battery is ≥ 40°C, T_{H}-T_{L} = T₀, and T₀ ≥ 10°C, the partitioned control mode is enabled. When it is determined that the highest temperature of the battery is < 40°C, T_{H}-T_{L} = T₀, and T₀ < 10°C, the partitioned control mode is exited. T_{H} is the highest temperature of the battery, and T_{L} is the lowest temperature of the battery.

In some embodiments of the present disclosure, when it is determined that the highest temperature of the battery is ≥ 40°C, T_{H}-T_{L} = T₀, T₀ ≥ 10°C, and the lowest temperature of the battery is > 10°C, a cooling partitioned control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that the highest temperature of the battery is ≤ -10°C, T_{H}-T_{L} = T₀, T₀ ≥ 10°C, and the lowest temperature of the battery is < 10°C, a heating partitioned control mode is controlled to be entered, the second region is controlled to be preferentially heated, and the heat exchange amount of the second trunk line is controlled to be greater than the heat exchange amount of the first trunk line.

A thermal management system 100 according to the embodiments of the present disclosure will be described below with reference to FIG. 1 and FIG. 2.

The thermal management system 100 according to the embodiments of the present disclosure includes a battery heat exchange module and a controller. The battery heat exchange module includes: a first trunk line 10a and a second trunk line 10b. A first heat exchange unit 21 is arranged in the first trunk line 10a, a second heat exchange unit 22 is arranged in the second trunk line 10b, and the first heat exchange unit 21 and the second heat exchange unit 22 are configured to exchange heat with a battery.

The thermal management system 100 of the present disclosure is applied to a vehicle. The vehicle may be a fuel-powered vehicle, a gas-powered vehicle, a new energy vehicle, or a rail vehicle. The new energy vehicle may be a pure electric vehicle, a hybrid electric vehicle, an extended range vehicle, or the like. The battery heat exchange module in the thermal management system 100 is adapted to exchange heat with a battery of the vehicle. The battery may be configured to supply power to the vehicle. For example, the battery may be used as an operating power supply of the vehicle, or the battery may be used as a driving power supply of the vehicle to provide driving power for the vehicle in place of or partially in place of fuel, natural gas, or the like, or the battery may be configured to supply power to some components of the vehicle such as a motor, so that the battery can be used for an working power consumption requirement of at least one of starting, navigation, traveling, and the like of the vehicle.

The first heat exchange unit 21 and the second heat exchange unit 22 may exchange heat with the battery to regulate a temperature of the battery, so that the battery has a proper working temperature, thereby ensuring stable and reliable working of the battery. For example, in the winter, when the ambient temperature is low, the battery may be heated, to increase the starting speed of the battery. In another example, in the summer, when the ambient temperature is excessively high or the working temperature of the battery is high, the battery may be cooled, to improve the working safety of the battery and extend the service life of the battery.

The thermal management system 100 in the present disclosure further includes a controller. The controller is configured to control, according to the temperature of the battery, at least one of the first trunk line 10a and the second trunk line 10b to exchange heat. The first heat exchange unit 21 is arranged in the first trunk line 10a, and the second heat exchange unit 22 is arranged in the second trunk line 10b. Therefore, the controller may control one of the first heat exchange unit 21 and the second heat exchange unit 22 to exchange heat with the battery. Working mediums circulating in the first trunk line 10a and the second trunk line 10b may be the same or different. The working medium may be water, or may be another liquid working medium other than water, or may be another medium that can undergo a phase change, such as carbon dioxide or a cooling medium. For example, a liquid working medium circulates in the first trunk line 10a, and a medium that can undergo a phase change circulates in the second trunk line 10b. For example, the first trunk line 10a may be connected to a high-pressure cooling system or an engine cooling system to circulate a coolant in the high-pressure cooling system or the engine cooling system, and the second trunk line 10b is connected to an air conditioning system to circulate a medium that undergoes a phase change in the air conditioning system.

The controller may control the first heat exchange unit 21 to exchange heat with the battery, or the controller may control the second heat exchange unit 22 to exchange heat with the battery, or the controller may control both the first heat exchange unit 21 and the second heat exchange unit 22 to exchange heat with the battery, which may be selected according to an actual need of the battery.

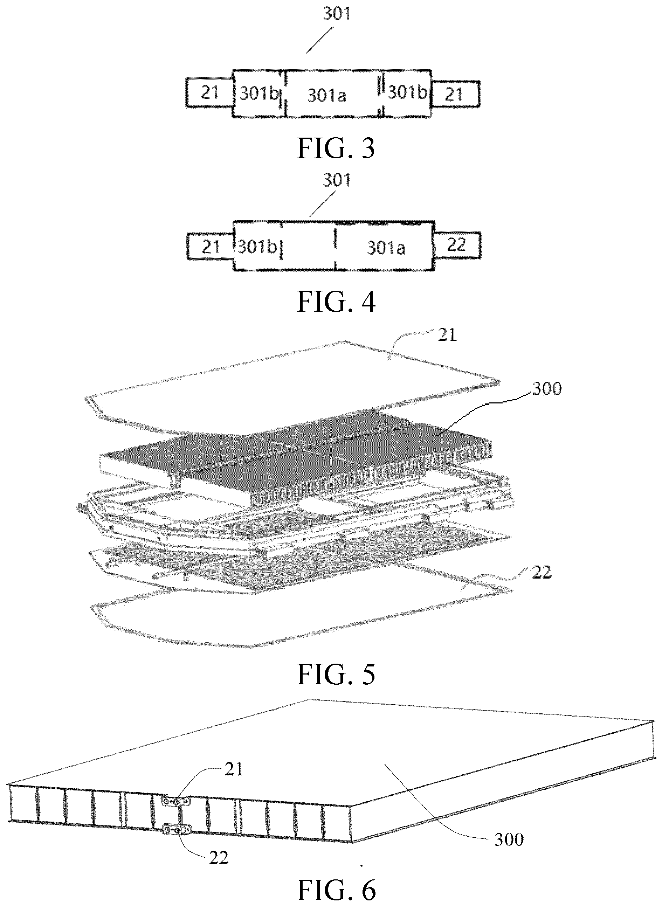

For example, referring to FIG. 5, FIG. 5 is a schematic diagram of an implementation of a battery pack according to the present disclosure. The battery pack includes a battery, a first heat exchange unit 21, and a second heat exchange unit 22. The battery is arranged between the first heat exchange unit 21 and the second heat exchange unit 22. The first heat exchange unit 21 is arranged on a side of (above) the battery, the second heat exchange unit 22 is arranged on another side of (below) the battery, the first heat exchange component is an upper cover of the battery, and the second heat exchange component is a bottom plate of the battery. When the battery needs a large heat exchange amount, the first trunk line 10a and the second trunk line 10b may be allowed to exchange heat simultaneously. When the battery needs a relatively small heat exchange amount, one of the first trunk line 10a and the second trunk line 10b may be allowed to exchange heat. The first heat exchange unit 21 is arranged on a side of the battery, and the second heat exchange unit 22 is arranged on another side of the battery. When a heat generation amount on a side of the battery is higher than a normal working temperature of the battery, the controller controls a heat exchange component corresponding to the side to cool the battery.

When the battery needs a large heat exchange amount, the first trunk line 10a and the second trunk line 10b may be allowed to exchange heat simultaneously. When the battery needs a relatively small heat exchange amount, one of the first trunk line 10a and the second trunk line 10b may be allowed to exchange heat. The first heat exchange unit 21 is arranged on a side of the battery, and the second heat exchange unit 22 is arranged on another side of the battery. When a heat generation amount on a side of the battery is higher than a normal working temperature of the battery, the controller controls a heat exchange component corresponding to the side to cool the battery.

The first heat exchange unit 21 and the second heat exchange unit 22 are mutually independent components and may operate independently of each other, and the first trunk line and the second trunk line have different heat exchange modes. When the first heat exchange unit 21 and the second heat exchange unit 22 are arranged in different regions of the battery, heat exchange effects of the first heat exchange unit 21 and the second heat exchange unit 22 may be opposite. For example, the first heat exchange unit 21 heats the battery, and the second heat exchange unit 22 cools the battery, so that the temperature of the battery is uniform. The thermal management modes of the battery heat exchange module include: The first trunk line and the second trunk line perform heating simultaneously or perform cooling simultaneously, and one of the first trunk line and the second trunk line performs heating and the other of the first trunk line and the second trunk line performs cooling. The battery heat exchange module is adapted to different thermal management modes according to temperatures in different regions of the battery, so that the temperature of the battery is uniform.

For example, referring to FIG. 3 and FIG. 4, FIG. 3 is a schematic diagram of a first implementation of a battery core according to the present disclosure, and FIG. 4 is a schematic diagram of a second implementation of a battery core according to the present disclosure. The battery includes a plurality of battery cores. The plurality of battery cores are arranged in the battery. Electrodes are arranged at two ends of a battery core 301, or an electrode is arranged at one end of the battery core 301. During working of the battery core 301, the electrode generates a large amount of heat. A region near the electrode is an electrode heating region, and a region away from the electrode is a non-electrode heating region. Generally, during working of the battery 300, the electrode generates a large amount of heat, so that a temperature of the region near the electrode is higher pressure than a temperature of the region away from the electrode. On one or two sides of the battery, a first heat exchange unit 21 is arranged corresponding to an electrode heating temperature region 301b, and a second heat exchange unit 22 is arranged in a non-electrode heating temperature region 301a of the battery. When the temperature of the electrode heating temperature region 301b is higher than the working temperature of the battery, the first heat exchange unit 21 cools the electrode heating temperature region 301b. When the temperature of the non-electrode heating temperature region 301a of the battery is lower than the working temperature of the battery, the second heat exchange unit 22 heats the non-electrode heating temperature region 301a of the battery.

For example, in a working condition, efficiency with which the first heat exchange unit 21 or the second heat exchange unit 22 exchanges heat with the battery alone may be lower than efficiency with which the first heat exchange unit 21 and the second heat exchange unit 22 exchanges heat with the battery together. In addition, heat exchange efficiency of the first heat exchange unit and the second heat exchange unit for the battery may be different. Therefore, by arranging the controller, the first heat exchange unit 21, the second heat exchange unit 22, or a combination of the first heat exchange unit 21 and the second heat exchange unit 22 can exchange heat with the battery, and the battery heat exchange module can exchange heat with the battery with different efficiency. According to the temperature of the battery, the battery heat exchange module is allowed to exchange heat with the battery with suitable efficiency, so that energy consumption of the thermal management system 100 can be reduced, and the functionality of the thermal management system 100 can be improved.

In the thermal management system 100 according to this embodiment of the present disclosure, the first heat exchange unit 21 and the second heat exchange unit 22 are arranged, and the controller is arranged to control at least one of the first heat exchange unit 21 or the second heat exchange unit 22 to exchange heat with the battery, so that the battery heat exchange module exchanges heat with the battery with different efficiency or in different thermal management modes. According to the temperature of the battery, the controller allows the battery heat exchange module to exchange heat with the battery with suitable efficiency or in different thermal management modes, so that energy consumption of the thermal management system 100 can be reduced, and the functionality of the thermal management system 100 can be improved.

In some embodiments of the present disclosure, a working medium circulates in each of the first trunk line 10a and the second trunk line 10b, and the working mediums are adapted to exchange heat with the battery at the first heat exchange unit 21 and the second heat exchange unit 22, to heat or cool the battery.

In some embodiments of the present disclosure, the thermal management system 100 further includes an air conditioning circulation circuit 101. The air conditioning circulation circuit 101 includes a heating branch. The first trunk line 10a is connected in parallel to the heating branch. The second trunk line 10b is connected in parallel to the heating branch. The controller is configured to control at least one of the heating branch, the first trunk line 10a, and the second trunk line 10b to exchange heat.

The thermal management system 100 further includes an air conditioning circulation circuit 101, and the air conditioning circulation circuit 101 is adapted to perform heat exchange for a passenger compartment. For example, in the winter, when the ambient temperature is low, the air conditioning circulation circuit 101 may heat the passenger compartment. In the summer, when the ambient temperature is excessively high, the air conditioning circulation circuit 101 may cool the passenger compartment, thereby improving user comfort. Optionally, the working medium circulates in the air conditioning circulation circuit 101, and the working medium exchanges heat in the heating branch, so as to heat or cool the passenger compartment.

The heating branch of the air conditioning circulation circuit 101 is configured to exchange heat with the passenger compartment, to heat the passenger compartment. The heating branch is connected in parallel to both the first trunk line 10a and the second trunk line 10b, and the heating branch, the first trunk line 10a, and the second trunk line 10b all operate independently of each other, so that heating for the passenger compartment and heat exchange for the battery do not conflict with each other.

The controller may control the heating branch to exchange heat alone, the controller may control the first heat exchange unit 21 in the first trunk line 10a to exchange heat alone, or the controller may control the second heat exchange unit 22 in the second trunk line 10b to exchange heat alone. The controller may alternatively control the heating branch, the first trunk line 10a, and the second trunk line 10b to cooperate with each other to perform heating together. Alternatively, the controller may control the heating branch, the first trunk line 10a, and the second trunk line 10b to exchange heat simultaneously. The controller may control the battery heat exchange module to heat the battery while controlling the heating branch to heat the passenger compartment. Alternatively, the controller may control the battery heat exchange module to cool the battery while controlling the heating branch to heat the passenger compartment.

In some embodiments of the present disclosure, the air conditioning circulation circuit 101 includes: a cooling branch. The first trunk line 10a is connected in parallel to the cooling branch. The second trunk line 10b is connected in parallel to the cooling branch. The controller is configured to control at least one of the cooling branch, the first trunk line 10a, and the second trunk line 10b to exchange heat. The cooling branch includes an evaporator 140 and a third electronic expansion valve 63. The electronic expansion valve 63 is located connected the evaporator 140 and the out-vehicle condenser 130. The cooling branch further includes a third one-way valve 43. The third one-way valve 43 is located between the evaporator 140 and the compressor 11.

The cooling branch of the air conditioning circulation circuit 101 is configured to exchange heat with the passenger compartment, to cool the passenger compartment. The cooling branch is connected in parallel to both the first trunk line 10a and the second trunk line 10b, and the cooling branch, the first trunk line 10a, and the second trunk line 10b all operate independently of each other, so that cooling for the passenger compartment and heat exchange for the battery do not conflict with each other.

The controller may control the heating branch to exchange heat alone, the controller may control the first heat exchange unit 21 in the first trunk line 10a to exchange heat alone, or the controller may control the second heat exchange unit 22 in the second trunk line 10b to exchange heat alone. Alternatively, the controller may control the heating branch, the first trunk line 10a, and the second trunk line 10b to exchange heat simultaneously. The controller may control the battery heat exchange module to heat the battery while controlling the heating branch to cool the passenger compartment. Alternatively, the controller may control the battery heat exchange module to cool the battery while controlling the heating branch to cool the passenger compartment.

In some embodiments of the present disclosure, the air conditioning circulation circuit 101 includes: a cooling branch and a heating branch. The first trunk line 10a is connected in parallel to the cooling branch, the second trunk line 10b is connected in parallel to the cooling branch, the first trunk line 10a is connected in parallel to the heating branch, and the second trunk line 10b is connected in parallel to the heating branch. The controller is configured to control at least one of the heating hot branch, the cooling branch, the first trunk line 10a, and the second trunk line 10b to exchange heat.

The thermal management system 100 further includes an air conditioning circulation circuit 101, and the air conditioning circulation circuit 101 is adapted to perform heat exchange for a passenger compartment. For example, in the winter, when the ambient temperature is low, the air conditioning circulation circuit 101 may heat the passenger compartment. In the summer, when the ambient temperature is excessively high, the air conditioning circulation circuit 101 may cool the passenger compartment, thereby improving user comfort. The air conditioning circulation circuit 101 includes: a cooling branch and a heating branch. The cooling branch of the air conditioning circulation circuit 101 is configured to exchange heat with the passenger compartment to cool the passenger compartment, and the heating branch of the air conditioning circulation circuit 101 is configured to exchange heat with the passenger compartment to heat the passenger compartment. Optionally, the working medium circulates in the air conditioning circulation circuit 101, that is, circulates in the heating cooling and the cooling branch, so as to heat or cool the passenger compartment.

The cooling branch is connected in parallel to both the first trunk line 10a and the second trunk line 10b, and the heating branch is connected in parallel to both the first trunk line 10a and the second trunk line 10b. Therefore, the cooling branch, the heating branch, the first trunk line 10a, and the second trunk line 10b all operate independently of each other, and heat exchange for the passenger compartment and heat exchange for the battery do not conflict with each other.

The controller may control the heating branch to exchange heat alone, the controller may control the cooling branch to exchange heat alone, the controller may control the first heat exchange unit 21 in the first trunk line 10a to exchange heat alone, or the controller may control the second heat exchange unit 22 in the second trunk line 10b to exchange heat alone.

Alternatively, the controller may control any combination of the cooling branch, the heating branch, the first trunk line 10a, and the second trunk line 10b to exchange heat simultaneously. The controller may control the battery heat exchange module to heat the battery while controlling the cooling branch to cool the passenger compartment. Alternatively, the controller may control the battery heat exchange module to cool the battery while controlling the cooling branch to cool the passenger compartment. The controller may control the battery heat exchange module to heat the battery while controlling the heating branch to heat the passenger compartment. Alternatively, the controller may control the battery heat exchange module to cool the battery while controlling the heating branch to heat the passenger compartment. The controller may control the heating branch to heat the passenger compartment while controlling the cooling branch to cool the passenger compartment. Alternatively, the passenger compartment may control the battery unit to exchange heat for the battery while controlling the cooling branch to cool the passenger compartment and controlling the heating branch to heat the passenger compartment.

The heating branch and the heating branch of the air conditioning circulation circuit 101 are respectively connected in parallel to the first trunk line 10a and the second trunk line 10b, and operate independently of each other. The thermal management system 100 can be controlled to implement different functions by arranging a control valve, and the different functions can be synchronously performed, so that the thermal management system 100 has strong functionality, and the working efficiency of the thermal management system 100 is improved.

In some embodiments of the present disclosure, the thermal management system 100 further includes: a storage device. The storage device is connected between an exhaust port of the compressor 11 and an air inlet of the compressor 11.

When the compressor 11 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. The working medium may flow back to the compressor 11 again after performing heat exchange, to complete one cycle.

The storage device is connected between the exhaust port of the compressor 11 and the air inlet of the compressor 11, and the storage device is constructed to store the working medium and discharge the stored working medium. It may be understood that, phases of the working medium are different when heat exchange with the working medium is performed for heating and heat exchange with the working medium is performed for cooling. In addition, under the same mass, a volume of a gaseous working medium is greater than a volume of a liquid working medium, resulting in a difference between a working medium demand for heating and a working medium demand for cooling. The storage device may be arranged to store the working medium and discharge the stored working medium, so that the amount of the working medium can be increased or reduced according to the temperature of the battery.

It may be understood that the liquid working medium is more convenient to store. Therefore, in some embodiments of the present disclosure, the storage device is such constructed that the working medium can release heat and be liquefied in the storage device, and the storage device can store the liquid working medium. The storage device is connected between the exhaust port of the compressor 11 and the air inlet of the compressor 11. The working medium flowing out from the exhaust port of the compressor 11 may be liquefied by the storage device and then stored inside the storage device.

In some embodiments of the present disclosure, the controller controls, according to the temperature of the battery, the storage device to increase the working medium for the first trunk line 10a or/and the second trunk line 10b, or the controller may control, according to the temperature of the battery, the storage device to increase or reduce the working medium for the first trunk line 10a or/and the second trunk line 10b.

Phases of the working medium are different when the working medium heats the battery and cools the battery. In addition, under the same mass, a volume of a gaseous working medium is greater than a volume of a liquid working medium. As a result, a working medium demand for heating the battery is higher than a working medium demand for cooling the battery. When the battery heat exchange module heats the battery, the controller controls the storage device to discharge the stored working medium to replenish the first trunk line 10a or/and the second trunk line 10b, to meet a working medium demand for heating the battery. When the battery heat exchange module cools the battery, the storage device stores the flowing working medium, to reduce the working medium amount in the first trunk line 10a or/and the second trunk line 10b, thereby meeting a working medium demand for cooling the battery.

In some specific embodiments of the present disclosure, the storage device is constructed as a liquid storage dryer, and the liquid storage dryer is constructed to store the liquid working medium and discharge the stored liquid working medium. The liquid storage dryer may further filter out moisture and impurities in the working medium, to avoid damaging or blocking a working medium pipeline, and extend service life of the working medium pipeline, so that the working medium flows smoothly.

In some embodiments of the present disclosure, the air conditioning circulation circuit 101 includes: a compressor 11, a first heat exchanger 12, and a second heat exchanger 13. The compressor 11 includes an air inlet and an exhaust port, and the exhaust port of the compressor 11, the first heat exchanger 12, the second heat exchanger 13, and the air inlet of the compressor 11 are sequentially connected.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the first heat exchanger 12 is connected to the exhaust port of the compressor 11, a second port of the first heat exchanger 12 is connected to the second heat exchanger 13, and the second heat exchanger 13 is connected to the air inlet of the compressor 11. Therefore, the working medium flows out from the compressor 11, then flows through the first heat exchanger 12, then flows through the second heat exchanger 13, and finally returns to the compressor 11 after undergoing other heat exchange, to form a working medium circuit, and complete one cycle.

The heating branch includes the first heat exchanger 12, the first trunk line 10a is connected in parallel to the first heat exchanger 12, and the second trunk line 10b is connected in parallel to the first heat exchanger 12. The controller is configured to control the exhaust port of the compressor 11 to communicate with at least one of the first heat exchanger 12, the first trunk line 10a, and the second trunk line 10b, to implement heat exchange for the at least one of the first heat exchanger 12, the first trunk line 10a, and the second trunk line 10b.

The heating branch is connected in parallel to the first trunk line 10a, the heating branch is connected in parallel to the second trunk line 10b, the first heat exchanger 12 on the heating branch is connected in parallel to both the first heat exchange unit 21 on the first trunk line 10a and the second heat exchange unit 22 on the second trunk line 10b, and the first heat exchanger 12, the first heat exchange unit 21, and the second heat exchange unit 22 operate independently of each other.

The exhaust port of the compressor 11 is optionally connected to at least one of the heating branch, the first trunk line 10a, and the second trunk line 10b. The working medium flowing out from the exhaust port of the compressor 11 is a high-temperature and high-pressure gaseous working medium. Therefore, when the exhaust port of the compressor 11 is connected to one of the heating branch, the first trunk line 10a, and the second trunk line 10b, the heating branch, the first trunk line 10a, and the second trunk line 10b perform heating.

The controller may control the exhaust port of the compressor 11 to communicate with the heating branch, to implement heat exchange for the first heat exchanger 12. The controller may further control the exhaust port of the compressor 11 to communicate with the first trunk line 10a, to control the first heat exchange unit 21 to exchange heat. The controller may further control the exhaust port of the compressor 11 to communicate with the second trunk line 10b, to control the second heat exchange unit 22 to exchange heat. The controller may further control the exhaust port of the compressor 11 to simultaneously communicate with any two or more of the heating branch, the first trunk line 10a, and the second trunk line 10b, to control the first heat exchanger 12, the first heat exchange unit 21, or the second heat exchange unit 22 to simultaneously exchange heat. Optionally, the controller may control the battery heat exchange module to heat the battery while controlling the first heat exchanger 12 to heat the passenger compartment.

In some embodiments of the present disclosure, the air conditioning circulation circuit 101 includes: a compressor 11, a second heat exchanger 13, and a third heat exchanger 14. The compressor 11 includes an air inlet and an exhaust port, and the exhaust port of the compressor 11, the second heat exchanger 13, the third heat exchanger 14, and the air inlet of the compressor 11 are sequentially connected.

The cooling branch includes the third heat exchanger 14, the first trunk line 10a is connected in parallel to the third heat exchanger 14, and the second trunk line 10b is connected in parallel to the third heat exchanger 14. The controller is configured to control the second heat exchanger 13 to communicate with at least one of the third heat exchanger 14, the first trunk line 10a, and the second trunk line 10b, to implement heat exchange for the at least one of the third heat exchanger 14, the first trunk line 10a, and the second trunk line 10b.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the second heat exchanger 13 is connected to the exhaust port of the compressor 11, a second port of the second heat exchanger 13 is connected to the third heat exchanger 14, and the third heat exchanger 14 is connected to the air inlet of the compressor 11. Therefore, the working medium flows out from the compressor 11, then flows through the second heat exchanger 13, and then flows through the third heat exchanger 14. The working medium releases heat and is liquefied in the second heat exchanger 13, then is throttled and depressurized, and then enters the third heat exchanger 14 to absorb heat and be vaporized, thereby performing cooling in the third heat exchanger 14. The gaseous working medium finally returns to the compressor 11, to form a working medium circuit, and complete one cycle.

The cooling branch is connected in parallel to the first trunk line 10a, the cooling branch is connected in parallel to the second trunk line 10b, the third heat exchanger 14 on the cooling branch is connected in parallel to both the first heat exchange unit 21 on the first trunk line 10a and the second heat exchange unit 22 on the second trunk line 10b, and the third heat exchanger 14, the first heat exchange unit 21, and the second heat exchange unit 22 operate independently of each other.

The controller may control the second heat exchanger 13 to communicate with the cooling branch, to implement heat exchange for the third heat exchanger 14. The controller may further control the second heat exchanger 13 to communicate with the first trunk line 10a, to control the first heat exchange unit 21 to exchange heat. The controller may further control the second heat exchanger 13 to communicate with the second trunk line 10b, to control the second heat exchange unit 22 to exchange heat. The controller may further control the second heat exchanger 13 to simultaneously communicate with any two or more of the cooling branch, the first trunk line 10a, and the second trunk line 10b, to control the third heat exchanger 14, the first heat exchange unit 21, or the second heat exchange unit 22 to simultaneously exchange heat. Optionally, the controller may control the battery heat exchange module to cool the battery while controlling the third heat exchanger 14 to cool the passenger compartment.

In some embodiments of the present disclosure, the heat pump air conditioning circulation circuit 101 includes: a compressor 11, a first heat exchanger 12, a second heat exchanger 13, and a third heat exchanger 14. The compressor 11 includes an air inlet and an exhaust port, and the exhaust port of the compressor 11, the first heat exchanger 12, the second heat exchanger 13, the third heat exchanger 14, and the air inlet of the compressor 11 are sequentially connected.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the first heat exchanger 12 is connected to the exhaust port of the compressor 11, a second port of the first heat exchanger 12 is connected to a first port of the second heat exchanger 13, a second port of the second heat exchanger 13 is connected to a first port of the third heat exchanger 14, and a second port of the third heat exchanger 14 is connected to the air inlet of the compressor 11. Therefore, the working medium flows out from the compressor 11, then flows through the first heat exchanger 12, then flows through the second heat exchanger 13, then flows through the third heat exchanger 14, and finally returns to the compressor 11, to form a working medium circuit, and complete one cycle. The working medium exchanges heat in at least one of the first heat exchanger 12, the second heat exchanger 13, and the third heat exchanger 14, and then a gaseous working medium is formed and returns to the air inlet of the compressor 11.

The heating branch includes the first heat exchanger 12, and the cooling branch includes the third heat exchanger 14. The first trunk line 10a is connected in parallel to the first heat exchanger 12, the second trunk line 10b is connected in parallel to the first heat exchanger 12, the first trunk line 10a is connected in parallel to the third heat exchanger 14, and the second trunk line 10b is connected in parallel to the third heat exchanger 14. The second heat exchanger 13 may be located in the heating branch, or the second heat exchanger 13 may be located in the cooling branch, or the second heat exchanger 13 may be used as only a pipeline for the working medium to pass through and the working medium neither absorbs heat nor releases heat in the second heat exchanger 13, which can be selected as required actually.

The heating branch is connected in parallel to the first trunk line 10a, the heating branch is connected in parallel to the second trunk line 10b, the first heat exchanger 12 on the heating branch is connected in parallel to both the first heat exchange unit 21 on the first trunk line 10a and the second heat exchange unit 22 on the second trunk line 10b, and the first heat exchanger 12, the first heat exchange unit 21, and the second heat exchange unit 22 operate independently of each other. The cooling branch is connected in parallel to the first trunk line 10a, the cooling branch is connected in parallel to the second trunk line 10b, the third heat exchanger 14 on the cooling branch is connected in parallel to both the first heat exchange unit 21 on the first trunk line 10a and the second heat exchange unit 22 on the second trunk line 10b, and the third heat exchanger 14, the first heat exchange unit 21, and the second heat exchange unit 22 operate independently of each other.

Because the heating branch is connected in parallel to the first trunk line 10a, and the heating branch is connected in parallel to the second trunk line 10b, the exhaust port of the compressor 11 is optionally connected to at least one of the heating branch, the first trunk line 10a, and the second trunk line 10b, and the at least one of the heating branch, the first trunk line 10a, and the second trunk line 10b exchanges heat. Specifically, the working medium flowing out from the exhaust port of the compressor 11 is a high-temperature and high-pressure gaseous working medium. Therefore, when the exhaust port of the compressor 11 is connected to one of the heating branch, the first trunk line 10a, and the second trunk line 10b, the at least one of the heating branch, the first trunk line 10a, and the second trunk line 10b performs heating.

Because the cooling branch is connected in parallel to the first trunk line 10a, and the cooling branch is connected in parallel to the second trunk line 10b, the air inlet of the compressor 11 is optionally connected to at least one of the cooling branch, the first trunk line 10a, and the second trunk line 10b. Similarly, the second heat exchanger 13 connected to the other side of the third heat exchanger 14 also optionally communicates with at least one of the heating branch, the first trunk line 10a, and the second trunk line 10b, and the at least one of the cooling refrigeration, the first trunk line 10a, and the second trunk line 10b exchanges heat. Optionally, at least one of the cooling branch, the first trunk line 10a, and the second trunk line 10b performs cooling.

The controller is configured to control the exhaust port of the compressor 11 to communicate with at least one of the first heat exchanger 12, the first trunk line 10a, and the second trunk line 10b, to implement heat exchange for the at least one of the first heat exchanger 12, the first trunk line 10a, and the second trunk line 10b.

The controller may control the exhaust port of the compressor 11 to communicate with the heating branch, to implement heat exchange for the first heat exchanger 12. The controller may further control the exhaust port of the compressor 11 to communicate with the first trunk line 10a, to control the first heat exchange unit 21 to exchange heat. The controller may further control the exhaust port of the compressor 11 to communicate with the second trunk line 10b, to control the second heat exchange unit 22 to exchange heat. The controller may further control the exhaust port of the compressor 11 to simultaneously communicate with any two or more of the heating branch, the first trunk line 10a, and the second trunk line 10b, to control the first heat exchanger 12, the first heat exchange unit 21, or the second heat exchange unit 22 to simultaneously exchange heat. Optionally, the controller may control the battery heat exchange module to heat the battery while controlling the first heat exchanger 12 to heat the passenger compartment.

Alternatively, the controller is configured to control the second heat exchanger 13 to communicate with at least one of the first trunk line 10a, the second trunk line 10b, and the third heat exchanger 14, to implement heat exchange for the at least one of the first trunk line 10a, the second trunk line 10b, and the third heat exchanger 14.

The controller may control the second heat exchanger 13 to communicate with the cooling branch, to implement heat exchange for the third heat exchanger 14. The controller may further control the second heat exchanger 13 to communicate with the first trunk line 10a, to control the first heat exchange unit 21 to exchange heat. The controller may further control the second heat exchanger 13 to communicate with the second trunk line 10b, to control the second heat exchange unit 22 to exchange heat. The controller may further control the second heat exchanger 13 to simultaneously communicate with any two or more of the heating branch, the first trunk line 10a, and the second trunk line 10b, to control the third heat exchanger 14, the first heat exchange unit 21, or the second heat exchange unit 22 to simultaneously exchange heat. Optionally, the controller may control the battery heat exchange module to cool the battery while controlling the third heat exchanger 14 to cool the passenger compartment. Optionally, the controller may control the battery heat exchange module to heat the battery while controlling the first heat exchanger 12 to cool the passenger compartment.

In some embodiments of the present disclosure, the first heat exchanger 12 is an in-vehicle condenser 120, and the in-vehicle condenser 120 is adapted to heat the passenger compartment. When the working medium flows in a working medium circuit jointly formed by the compressor 11 and the in-vehicle condenser 120, a high-temperature and high-pressure gaseous working medium flowing out from the exhaust port of the compressor 11 exchanges heat at the in-vehicle condenser 120, the working medium releases heat and is liquefied, and then after the working medium is throttled, is depressurized, absorbs heat, and is vaporized, the working medium finally becomes a low-temperature and low-pressure gaseous working medium to flow in from the air inlet of the compressor 11, to complete one cycle. Alternatively, the in-vehicle condenser 120 may function as only a pipeline, and the working medium flows through the in-vehicle condenser 120 without heat exchange.

In some specific embodiments of the present disclosure, in a working medium circuit jointly formed by the compressor 11, the in-vehicle condenser 120, and the second heat exchanger 13, a high-temperature and high-pressure gaseous working medium flowing out from the exhaust port of the compressor 11 exchanges heat at the in-vehicle condenser 120, the working medium releases heat and is liquefied, and the in-vehicle condenser 120 is adapted to heat the passenger compartment.

The controller may control the exhaust port of the compressor 11 to optionally communicate with at least one of the in-vehicle condenser 120, the first heat exchange unit 21, and the second heat exchange unit 22. By arranging the controller to change a flow path of the working medium in the air conditioning circulation circuit 101, the passenger compartment can be heated and/or the battery can be heated.

It may be understood that the air conditioning circulation circuit 101 has a plurality of branches as a whole, and a working medium circuit jointly formed by the compressor 11, the first heat exchanger 12, and the second heat exchanger 13, and the like are all part of the air conditioning circulation circuit 101.

In some embodiments of the present disclosure, the second heat exchanger 13 is an out-vehicle condenser 130. The working medium releases heat through the out-vehicle condenser 130, and the out-vehicle condenser 130 may perform heating. For example, in the winter, when an ambient temperature is low, an element of the vehicle needs to be preheated and started. The element is heated by the out-vehicle condenser 130, so that a starting speed of the vehicle can be increased. Alternatively, the out-vehicle condenser 130 may function as only a pipeline, and the working medium flows through the out-vehicle condenser 130 without heat exchange.

In some embodiments of the present disclosure, the third heat exchanger 14 is an evaporator 140, and the evaporator 140 is adapted to cool the passenger compartment.

When the working medium flows in a working medium circuit j ointly formed by the compressor 11 and the evaporator 140, a high-temperature and high-pressure gaseous working medium flowing out from the exhaust port of the compressor 11 exchanges heat in a pipeline first, the working medium releases heat and is liquefied, then the working medium is throttled and depressurized and enters the evaporator 140, the working medium absorbs heat and is vaporized at the evaporator 140, to cool the evaporator 140, and the working medium finally becomes a low-temperature and low-pressure gaseous working medium to flow in from the air inlet of the compressor 11, to complete one cycle.

In some specific embodiments of the present disclosure, in a working medium circuit j ointly formed by the compressor 11, the second heat exchanger 13, and the evaporator 140, a high-temperature and high-pressure gaseous working medium flowing out from the exhaust port of the compressor 11 exchanges heat at the second heat exchanger 13, the working medium releases heat and is liquefied, then the working medium is throttled and depressurized and enters the evaporator 140, the working medium absorbs heat and is vaporized at the evaporator 140, to cool the passenger compartment, and then the working medium becomes a low-temperature and low-pressure gaseous working medium to flow in from the air inlet of the compressor 11, to complete one cycle.

The controller may control the second heat exchanger 13 to optionally communicate with at least one of the evaporator 140, the first heat exchange unit 21, and the second heat exchange unit 22. By arranging the controller to change a flow path of the working medium in the air conditioning circulation circuit 101, the passenger compartment can be cooled and/or the battery can be cooled.

In some specific embodiments of the present disclosure, in a working medium circuit jointly formed by the compressor 11, the in-vehicle condenser 120, the out-vehicle condenser 130, and the evaporator 140, a high-temperature and high-pressure gaseous working medium flowing out from the exhaust port of the compressor 11 exchanges heat at the in-vehicle condenser 120, the working medium releases heat and is liquefied, and the in-vehicle condenser 120 is adapted to heat the passenger compartment. Alternatively, the in-vehicle condenser 120 may be used as only a flow channel, and the working medium flows through the in-vehicle condenser 120 without heat exchange. Then, the working medium continues to flow toward the out-vehicle condenser 130, and the working medium may perform heat exchange at the out-vehicle condenser 130, to release heat for the second time. Alternatively, the working medium may pass only through the out-vehicle condenser 130, and perform no heat exchange at the out-vehicle condenser 130. After releasing heat and being liquefied, the working medium is throttled and depressurized and enters the evaporator 140, the working medium absorbs heat and is vaporized at the evaporator 140, to cool the passenger compartment, and then the working medium becomes a low-temperature and low-pressure gaseous working medium to flow in from the air inlet of the compressor 11, to complete one cycle.

The controller may control the exhaust port of the compressor 11 to optionally communicate with at least one of the in-vehicle condenser 120, the first heat exchange unit 21, and the second heat exchange unit 22. In addition, the controller may further control the second heat exchanger 13 to optionally communicate with at least one of the evaporator 140, the first heat exchange unit 21, and the second heat exchange unit 22. By arranging the controller to change a flow path of the working medium in the air conditioning circulation circuit 101, the thermal management system 100 is allowed to operate in different working conditions. The thermal management system 100 in the present disclosure has strong functionality.

When the controller controls the exhaust port of the compressor 11 to communicate with the in-vehicle condenser 120, the controller controls the out-vehicle condenser 130 to communicate with the evaporator 140, and the controller controls the exhaust port of the compressor 11 not to communicate with the first trunk line 10a and the second trunk line 10b, the working medium passes through the in-vehicle condenser 120 without heat exchange, the working medium passes through the out-vehicle condenser 130 to release heat, and the working medium passes through the evaporator 140 to absorb heat, so that the thermal management system 100 can achieve a working condition of independently cooling the passenger compartment.

When the controller controls the exhaust port of the compressor 11 to communicate with the in-vehicle condenser 120, the controller controls the out-vehicle condenser 130 to communicate with the first trunk line 10a and the second trunk line 10b, and the controller controls the exhaust port of the compressor 11 not to communicate with the first trunk line 10a and the second trunk line 10b and controls the out-vehicle condenser 130 not to communicate with the evaporator 140, the working medium passes through the in-vehicle condenser 120 without heat exchange, the working medium passes through the out-vehicle condenser 130 to release heat, and the working medium passes through the first heat exchange unit 21 and/or the second heat exchange unit 22 to absorb heat, so that the thermal management system 100 can achieve a working condition of cooling the battery.

When the controller controls the exhaust port of the compressor 11 to communicate with the in-vehicle condenser 120, the controller controls the out-vehicle condenser 130 to communicate with the first trunk line 10a and the second trunk line 10b and controls the out-vehicle condenser 130 to communicate with the evaporator 140, and the controller controls the exhaust port of the compressor 11 to communicate with neither the first trunk line 10a nor the second trunk line 10b, the working medium passes through the in-vehicle condenser 120 without heat exchange, the working medium passes through the out-vehicle condenser 130 to release heat, the working medium passes through the first heat exchange unit 21 and/or the second heat exchange unit 22 to absorb heat, and the working medium passes through the evaporator 140 to absorb heat, so that the thermal management system 100 can achieve a working condition of cooling the battery while cooling the passenger compartment.

When the controller controls the exhaust port of the compressor 11 to communicate with the in-vehicle condenser 120, and the controller controls the exhaust port of the compressor 11 not to communicate with the first trunk line 10a and the second trunk line 10b, the working medium passes through the in-vehicle condenser 120 to release heat, so that the thermal management system 100 can achieve a working condition of heating the passenger compartment.

When the controller controls the exhaust port of the compressor 11 to communicate with the first trunk line 10a and the second trunk line 10b, and the controller controls the exhaust port of the compressor 11 not to communicate with the in-vehicle condenser 120, the working medium passes through the first heat exchange unit 21 and/or the second heat exchange unit 22 to release heat, so that the thermal management system 100 can achieve a working condition of heating the battery.

When the controller controls the exhaust port of the compressor 11 to communicate with the in-vehicle condenser 120, and the controller controls the exhaust port of the compressor 11 to communicate with the first trunk line 10a and the second trunk line 10b, the working medium passes through the in-vehicle condenser 120 to release heat, and the working medium passes through the first heat exchange unit 21 and/or the second heat exchange unit 22 to release heat, so that the thermal management system 100 can achieve a working condition of heating both the passenger compartment and the battery.

In some embodiments of the present disclosure, the thermal management system 100 includes a first exhaust flow channel 10c. The battery heat exchange module is connected to the air inlet through the first exhaust flow channel 10c, and the working medium flowing through the battery heat exchange module may flow back to the air inlet through the first exhaust flow channel 10c. For example, when the battery is cooled, the working medium flows out from the exhaust port, passes through the out-vehicle condenser 130 to release heat, then absorbs heat at the battery heat exchange module, and then flows back to the air inlet through the first exhaust flow channel 10c.

The thermal management system 100 further includes a second exhaust flow channel 10d connected to the exhaust port. The second exhaust flow channel 10d is connected to the first exhaust flow channel 10c. Therefore, the battery heat exchange module is connected to the exhaust port through the second exhaust flow channel 10d, and the working medium may flow to the battery heat exchange module through the second exhaust flow channel 10d. For example, when the battery is heated, the working medium flows out from the exhaust port, flows to the battery heat exchange module through the second heat exchange flow channel, and releases heat at the battery heat exchange module.

The thermal management system 100 further includes a third exhaust flow channel 10e enabling the exhaust port to communicate with the in-vehicle condenser 120. The working medium may flow to the out-vehicle condenser 130 through the third exhaust flow channel 10e, and release heat at the in-vehicle condenser 120.

In some embodiments of the present disclosure, the controller includes a plurality of control valve groups, and the control valve groups operate to enable the exhaust port to communicate with at least one of the in-vehicle condenser 120 and the battery heat exchange module, to cause the working medium of the exhaust port to flow to the in-vehicle condenser 120 or the battery heat exchange module. The flow direction of the working medium may be controlled by arranging the control valve group, to control the working of the thermal management system 100.

In some specific embodiments of the present disclosure, the control valve group includes a first on-off valve 51, a second on-off valve 52, and a third on-off valve 53. The first on-off valve 51 is connected in series to the second exhaust flow channel 10d, and the third on-off valve 53 is connected between the out-vehicle condenser 130 and the exhaust port, that is, the third on-off valve 53 is connected in series to the third exhaust flow channel 10e. The second on-off valve 52 is connected in series to the first exhaust flow channel 10c. When the second on-off valve 52 is closed, the working medium of the second exhaust flow channel 10d is prevented from flowing to an air return port.

The first on-off valve 51 may control on-off of the second exhaust flow channel 10d, to control whether the working medium flows to the battery heat exchange module from the exhaust port. When the first on-off valve 51 is closed, the working medium is prevented from flowing to the battery heat exchange module. The third on-off valve 53 may control on-off of the third flow channel, to control whether the working medium flows from the exhaust port to the out-vehicle condenser 130. When the third on-off valve 53 is closed, the working medium is prevented from flowing to the out-vehicle condenser 130.

The first exhaust flow channel 10c is connected to the air return port, the second exhaust flow channel 10d is connected to the exhaust port, and the second exhaust flow channel 10d is connected to the first exhaust flow channel 10c. When the first on-off valve 51 controls the second exhaust flow channel 10d to enable circulation, the working medium flowing out from the exhaust port flows from the second exhaust flow channel 10d to the first exhaust flow channel 10c, and then directly flows back to the air return port. Therefore, by arranging the second on-off valve 52 at the first exhaust flow channel 10c, the second on-off valve 52 can control on-off of the first exhaust flow channel 10c. When the second on-off valve 52 is closed, the working medium of the second exhaust flow channel 10d is prevented from flowing to the air inlet.

In some embodiments of the present disclosure, a fourth electronic expansion valve 64 is further included, and the fourth electronic expansion valve 64 is connected in parallel to the third on-off valve 53.

In some embodiments of the present disclosure, the thermal management system 100 further includes a first switch valve 41 and a second switch valve 42. The first switch valve 41 is connected in series between the second end of the battery heat exchange module and the third heat exchanger 14, and the second switch valve 42 is connected in series between the second end of the battery heat exchange module and the second heat exchanger 13. The first switch valve 41 may control on-off between the battery heat exchange module and the third heat exchanger 14, and the second switch valve 42 may control on-off between the battery heat exchange module and the second heat exchanger 13. When one of the first switch valve 41 and the second switch valve 42 is turned on, the first trunk line 10a is connected in parallel to the first heat exchanger 12, the second trunk line 10b is connected in parallel to the first heat exchanger 12, the first trunk line 10a is connected in parallel to the third heat exchanger 14, and the second trunk line 10b is connected in parallel to the third heat exchanger 14.

In some specific embodiments of the present disclosure, the first switch valve 41 is constructed as a first one-way valve 41, and the first one-way valve 41 is such constructed that the working medium flows from the battery heat exchange module to the third heat exchanger 14. The first one-way valve 41 may control the working medium to flow from the battery heat exchange module to the third heat exchanger 14 stably, to improve flowability of the working medium, avoid reverse flow of the working medium, and improve working stability of the thermal management system 100. In addition, the first one-way valve 41 can operate stably and continuously, so that active control can be reduced, and manipulation can be facilitated.

In some specific embodiments of the present disclosure, the second switch valve 42 is constructed as a second one-way valve 42, and the second one-way valve 42 is such constructed that the working medium flows from the second heat exchanger 13 to the battery heat exchange module. The second one-way valve 42 may control the working medium to flow from the second heat exchanger 13 to the battery heat exchange module stably, to improve flowability of the working medium, avoid reverse flow of the working medium, and improve working stability of the thermal management system 100. In addition, the second one-way valve 42 can operate stably and continuously, so that active control can be reduced, and manipulation can be facilitated.

In some embodiments of the present disclosure, a first sensor 31 and a second sensor 32 are arranged in the first trunk line 10a, the first sensor 31 is located at the first end of the first heat exchange unit 21, and the second sensor 32 is located at the second end of the first heat exchange unit 21. A third sensor 33 and a fourth sensor 34 are further arranged in the second trunk line 10b. The third sensor 33 is located at the first end of the second heat exchange unit 22, and the fourth sensor 34 is located at the second end of the second heat exchange unit 22.

By arranging the sensors, various values of the working medium in the first trunk line 10a and various values of the working medium in the second trunk line 10b can be visually and accurately obtained. The controller may control flow conditions of the working medium in the first trunk line 10a and the second trunk line 10b according to the temperature of the battery, which not only facilitates operation, but also enables the battery to quickly reach a proper working temperature, thereby improving working stability of the battery.

In some specific embodiments of the present disclosure, the first sensor 31 is constructed as a pressure sensor, and the first sensor 31 may obtain a pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain a pressure of the working medium in the second trunk line 10b. The fourth sensor 34 is constructed as a temperature sensor, and the fourth sensor 34 may obtain a temperature of the working medium in the second trunk line 10b.

In some embodiments of the present disclosure, the first trunk line 10a is provided with a first sensor 31, a second sensor 32, and a first flow regulating element. The first sensor 31 is located at the first end of the first heat exchange unit 21, the first flow regulating element is located at the second end of the first heat exchange unit 21, and the second sensor 32 is arranged between the second end of the first heat exchange unit 21 and the first flow regulating element. The second trunk line 10b is further provided with a third sensor 33, a fourth sensor 34, and a second flow regulating element. The third sensor 33 is located at the first end of the second heat exchange unit 22, the second flow regulating element is located at the second end of the second heat exchange unit 22, and the fourth sensor 34 is arranged between the second end of the second heat exchange unit 22 and the second flow regulating element.

In some specific embodiments of the present disclosure, the first sensor 31 is constructed as a pressure sensor, and the first sensor 31 may obtain a pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain a pressure of the working medium in the second trunk line 10b. The fourth sensor 34 is constructed as a temperature sensor, and the fourth sensor 34 may obtain a temperature of the working medium in the second trunk line 10b.

The first flow regulating element may regulate the flow of the working medium in the first trunk line 10a, thereby regulating the pressure in the first trunk line 10a, and playing a role in throttling and depressurization. The third flow regulating element may regulate the flow of the working medium in the second trunk line 10b, thereby regulating the pressure in the second trunk line 10b, and playing a role in throttling and depressurization. The pressures of the working medium in the first trunk line 10a and the second trunk line 10b are kept within a safety range, to prevent the pressures of the working medium in the first trunk line 10a and the second trunk line 10b from being excessively large to break through the pipeline and damage the battery, thereby improving the working stability of the battery.

When the working medium flows in the working medium circuit jointly formed by the compressor 11, the in-vehicle condenser 120, the out-vehicle condenser 130, and the battery heat exchange module, the working medium releases heat at the in-vehicle condenser 120 or the out-vehicle condenser 130, then is throttled and depressurized by the first flow regulating element and/or the second flow regulating element, and then becomes a low-temperature and low-pressure liquid working medium. After evaporating and absorbing heat at the battery heat exchange module, the working medium becomes a low-temperature and low-pressure gaseous working medium, and the low-temperature and low-pressure gaseous working medium flows into the compressor 11 from the air inlet, to complete one cycle.

In some embodiments of the present disclosure, the heat exchange element further includes a third switch valve and a fourth switch valve. The third switch valve is arranged on the first trunk line 10a, and the fourth switch valve is arranged on the second trunk line 10b.

The third switch valve may control on-off of the first trunk line 10a, and the fourth switch valve may control on-off of the second trunk line 10b, to control flow or stagnation of the working medium in the first trunk line 10a or the second trunk line 10b. The third switch valve and the fourth switch valve operate independently of each other.

When the third switch valve is turned on, the first trunk line 10a is connected in parallel to the third heat exchanger 14, and the first trunk line 10a is optionally connected in parallel to the first heat exchanger 12. When the fourth switch valve is turned on, the second trunk line 10b is connected in parallel to the third heat exchanger 14, and the second trunk line 10b is optionally connected in parallel to the first heat exchanger 12.

In some specific embodiments of the present disclosure, a first electronic expansion valve 61 is arranged in the first trunk line 10a, and a second electronic expansion valve 62 is arranged in the second trunk line 10b. The first sensor 31 is located at the first end of the first heat exchange unit 21, the first electronic expansion valve 61 is located at the second end of the first heat exchange unit 21, and the second sensor 32 is arranged between the second end of the first heat exchange unit 21 and the first electronic expansion valve 61. The third sensor 33 is located at the first end of the second heat exchange unit 22, the second electronic expansion valve 62 is located at the second end of the second heat exchange unit 22, and the fourth sensor 34 is arranged between the second end of the second heat exchange unit 22 and the second electronic expansion valve 62.

The electronic expansion valve has a flow regulating function, and the electronic expansion valve may depressurize the working medium flowing through the electronic expansion valve. The electronic expansion valve further has an on-off function, and further optionally closes the pipeline, to control flow or stagnation of the working medium in the pipeline in which the electronic expansion valve is located. Therefore, by arranging the first electronic expansion valve 61 on the first trunk line 10a, the first flow regulating element and the third switch valve can be removed. Similarly, by arranging the second electronic expansion valve 62 on the second trunk line 10b, the second flow regulating element and the fourth switch valve can be removed, thereby reducing the quantity of elements, and reducing arrangement difficulty.

In some specific embodiments of the present disclosure, a fifth switch valve is arranged at the first end of the evaporator 140, and the fifth switch valve is connected in series between the evaporator 140 and the air inlet of the compressor 11. The fifth switch valve may control on-off of a pipeline in which the evaporator 140 is located. When the fifth switch valve is turned on, the working medium may flow to the compressor 11 through the evaporator 140.

In some specific embodiments of the present disclosure, the fifth switch valve is constructed as a third one-way valve 43, and the third one-way valve 43 is such constructed that the working medium flows from the evaporator 140 to the compressor 11. The third one-way valve 43 may control the working medium to flow from the evaporator 140 to the compressor 11 stably, to improve flowability of the working medium, avoid reverse flow of the working medium, and improve working stability of the thermal management system 100. In addition, the third one-way valve 43 can operate stably and continuously, so that active control can be reduced, and manipulation can be facilitated.

In some specific embodiments of the present disclosure, a third electronic expansion valve 63 is arranged at the second end of the evaporator 140, and the third electronic expansion valve 63 is connected in series between the out-vehicle condenser 130 and the evaporator 140. The electronic expansion valve has a flow regulating function, and the third electronic expansion valve 63 may depressurize the working medium flowing through the third electronic expansion valve. The electronic expansion valve further has an on-off function, and further optionally closes the pipeline, to control whether the working medium flows to the evaporator 140.

When the working medium flows in the working medium circuit jointly formed by the compressor 11, the in-vehicle condenser 120, the out-vehicle condenser 130, and the evaporator 140, the working medium releases heat at the in-vehicle condenser 120 or the out-vehicle condenser 130, then is throttled and depressurized by the third electronic expansion valve 63, and then becomes a low-temperature and low-pressure liquid working medium. After evaporating and absorbing heat at the evaporator 140, the working medium becomes a low-temperature and low-pressure gaseous working medium, and the low-temperature and low-pressure gaseous working medium flows into the compressor 11 from the air inlet, to complete one cycle.

In some embodiments of the present disclosure, the thermal management system 100 further includes a bypass flow path 10f, a fourth on-off valve 54 is connected in series in the bypass flow path 10f, and the bypass flow path 10f is connected in parallel to the fifth switch valve, the evaporator 140, and the third electronic expansion valve 63 that are connected in series. The fourth on-off valve 54 may control continuity and isolation of the bypass flow path 10f. When the fourth on-off valve 54 unblocks the bypass flow path 10f, the working medium flows back to the air inlet through the bypass flow path 10f. When the fourth on-off valve 54 blocks the bypass flow path 10f, the working medium returns to the air inlet through the flow path in which the evaporator 140 is located.

In some specific embodiments of the present disclosure, a fifth on-off valve 55 is arranged at the first end of the out-vehicle condenser 130, and the fifth on-off valve 55 is connected in series between the out-vehicle condenser 130 and the exhaust port of the compressor 11. When the fifth on-off valve 55 is turned on, the working medium may flow to the out-vehicle condenser 130.

In some specific embodiments of the present disclosure, a fourth one-way valve 44 is arranged at the second end of the out-vehicle condenser 130. The fourth one-way valve 44 is such constructed that the working medium flow out from the out-vehicle condenser 130, to improve flowability of the working medium and avoid reverse flow of the working medium.

In some embodiments of the present disclosure, the thermal management system 100 further includes a sixth on-off valve 56, and the sixth on-off valve 56 is arranged on a side of the first switch valve 41 away from the battery heat exchange module. When the sixth on-off valve 56 is turned on, the working medium may flow from the battery heat exchange module to the evaporator 140.

In some embodiments of the present disclosure, the thermal management system 100 further includes a fifth one-way valve 45. The fifth one-way valve 45 is arranged between the battery heat exchange module and the air inlet of the compressor 11. The fifth one-way valve 45 is such constructed that the working medium flows from the battery heat exchange module to the air inlet of the compressor 11, to prevent the working medium flowing to the air inlet from flowing to a heat exchange component, thereby improving use safety of the heat exchange component.

In some embodiments of the present disclosure, the thermal management system 100 further includes a gas-liquid separator 15, and the gas-liquid separator 15 communicates with the air inlet of the compressor 11. After being throttled and evaporated, the working medium becomes a low-temperature and low-pressure gaseous working medium. Evaporation and heat absorption cannot completely ensure that the working medium is completely converted into a gaseous working medium. Therefore, before flowing into the compressor 11 again, the working medium needs to first flow into the gas-liquid separator 15. The gas-liquid separator 15 separates the gaseous working medium from the liquid working medium, and drives only the low-temperature and low-pressure gaseous working medium to flow to the compressor 11, to prevent liquid slugging of liquid drops on a functional member in the compressor 11, and ensure safe and normal operation of the compressor 11.

In some embodiments of the present disclosure, the thermal management system 100 further includes a series branch 10g. One end of the series branch 10g is connected to the first trunk line 10a, and the other end of the series branch 10g is connected to the second trunk line 10b. The controller is further configured to control, according to the temperature of the battery, the series branch 10g to connect the first trunk line 10a to the second trunk line 10b in series, so that the first trunk line 10a and the second trunk line 10b exchange heat simultaneously.

In some specific embodiments of the present disclosure, a first interface of the first heat exchange unit 21 is connected to a second interface of the second heat exchange unit 22 through the series branch 10g. The working medium flows in from a second port of the first heat exchange unit 21, then flows through the first heat exchange unit 21, then flows to the second heat exchange unit 22 through the series branch 10g, and finally flows out from a first port of the second heat exchange unit 22.

In some embodiments of the present disclosure, the series branch 10g includes a series switch valve 57. The first interface of the first heat exchange unit 21 is connected to the second interface of the second heat exchange unit 22 through the series switch valve 57. The series switch valve 57 may control on-off of the series branch 10g. When the series switch valve 57 closes the series branch 10g, the first trunk line 10a and the second trunk line 10b are connected in parallel. When the series switch valve 57 opens the series branch 10g, the first trunk line 10a and the second trunk line 10b may be connected in series.

In some embodiments of the present disclosure, the first sensor 31 is arranged between one end of the series branch 10g and the first interface of the first heat exchange unit 21, and the third sensor 33 is arranged between the other end of the series branch 10g and the second interface of the second heat exchange unit 22. When the first heat exchange unit 21 and the second heat exchange unit 22 are connected in series, each of the first sensor 31, the second sensor 32, the third sensor 33, and the fourth sensor 34 may detect information about the working medium.

In some embodiments of the present disclosure, the thermal management system 100 further includes a parallel switch valve 58. The parallel switch valve 58 is arranged on one side of the first interface of the first heat exchange unit 21 and one side of the first interface of the second heat exchange unit 22. The parallel switch valve 58 may control on-off of the first trunk line 10a and the second trunk line 10b. When the parallel switch valve 58 is turned on, the first trunk line 10a and the second trunk line 10b may be connected in parallel.

In some embodiments of the present disclosure, the first heat exchange unit 21 is arranged on a side of the battery, and the second heat exchange unit 22 is arranged on another side of the battery, to perform heat exchange for different sides of the battery, thereby improving heat exchange efficiency for the battery.

In some specific embodiments of the present disclosure, the first heat exchange unit 21 is a first heat exchange plate, the second heat exchange unit 22 is a second heat exchange plate, and the first heat exchange plate and the second heat exchange plate are arranged on two opposite sides of the battery. Compared with a design manner in which one heat exchange plate is arranged, the first heat exchange plate and the second heat exchange plate can cool or heat two opposite sides of the battery, which can improve efficiency of cooling or heating the battery, enable the battery to quickly reach a proper working temperature, and improve working stability of the battery.

In some embodiments of the present disclosure, at least one of the first heat exchange unit 21 and the second heat exchange unit 22 includes a plurality of heat exchange components, and the plurality of heat exchange components are connected in parallel. By arranging a plurality of heat exchange components, the area for exchanging heat with the battery can be increased, thereby further improving heat exchange efficiency for the battery.

In some embodiments of the present disclosure, one heat exchange component is arranged in an electrode heating region of the battery, and one heat exchange component is arranged in a non-electrode heating region of the battery.

The controller may control, according to the temperature of the battery, the heat exchange component arranged in the electrode heating region of the battery to perform cooling to a large extent, and the heat exchange component arranged in the non-electrode heating region of the battery to perform cooling to a small extent. Alternatively, the controller may control, according to the temperature of the battery, the heat exchange component arranged in the electrode heating region of the battery to perform cooling, and the heat exchange component arranged in the non-electrode heating region of the battery to perform heating.

The following describes an embodiment in which the thermal management system 100 operates in different working conditions with reference to FIG. 1.

Embodiment 1 is a working condition in which only the passenger compartment is cooled.

In the working condition in which only the passenger compartment is cooled, the working medium flows in a working medium circuit formed by the compressor 11, the in-vehicle condenser 120, the out-vehicle condenser 130, and the evaporator 140. In this case, the first on-off valve 51 blocks the second exhaust flow channel 10d, the second on-off valve 52 blocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 block the pipeline, the third electronic expansion valve 63 unblocks the pipeline to play a throttling role, and the fourth electronic expansion valve 64 blocks the pipeline.

A circulation path of the working medium is sequentially as follows: the working medium flows out from the compressor 11, passes through the first pressure sensor 81, the first temperature sensor 82, the in-vehicle condenser 120, the third on-off valve 53, the fifth on-off valve 55, the out-vehicle condenser 130, the fourth one-way valve 44, the third electronic expansion valve 63, the evaporator 140, the third one-way valve 43, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the third electronic expansion valve 63, and then flows to the evaporator 140. The working medium absorbs heat and is vaporized at the evaporator 140, and finally becomes the low-temperature and low-pressure gaseous working medium and flows in from the air inlet of the compressor 11, so that the evaporator 140 cools the passenger compartment.

Embodiment 2 is a working condition in which only the battery is cooled, and the first heat exchange unit 21 and the second heat exchange unit 22 operate separately. If the first heat exchange unit 21 operates, the second heat exchange unit 22 does not operate.

In the working condition in which only the battery is cooled, the working medium flows in a working medium circuit formed by the compressor 11, the in-vehicle condenser 120, the out-vehicle condenser 130, and the first heat exchange unit 21. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 unblocks the pipeline to play a throttling role, the second electronic expansion valve 62 blocks the pipeline, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11, and flows to the first branch through the first pressure sensor 81, the first temperature sensor 82, the in-vehicle condenser 120, the third on-off valve 53, the fifth on-off valve 55, the out-vehicle condenser 130, the fourth one-way valve 44, and the second one-way valve 42, and the working medium flowing to the first branch flows through the first electronic expansion valve 61, the second sensor 32, the first heat exchange unit 21, the first sensor 31, the parallel switch valve 58, the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61, and then flows to the first heat exchange unit 21. The working medium absorbs heat and is vaporized at the first heat exchange unit 21, and becomes the low-temperature and low-pressure gaseous working medium and flows in from the air inlet of the compressor 11, so that the first heat exchange plate cools the battery.

Embodiment 3 is a working condition in which only the battery is cooled, and the first heat exchange unit 21 and the second heat exchange unit 22 operate in parallel.

In the working condition in which only the battery is cooled, the working medium flows in a working medium circuit formed by the compressor 11, the in-vehicle condenser 120, the out-vehicle condenser 130, and the battery heat exchange module. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11, and flows to the first branch and the second branch through the first pressure sensor 81, the first temperature sensor 82, the in-vehicle condenser 120, the third on-off valve 53, the fifth on-off valve 55, the out-vehicle condenser 130, the fourth one-way valve 44, and the second one-way valve 42, the working medium flowing to the first branch passes through the first electronic expansion valve 61, the second sensor 32, the first heat exchange unit 21, the first sensor 31, and the parallel switch valve 58, and the working medium flowing to the second branch flows out from the second branch after passing through the second electronic expansion valve 62, the fourth sensor 34, the second heat exchange unit 22, and the third sensor 33, is mixed with the working medium flowing out from the first branch, then passes through the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61 and the second electronic expansion valve 62, and then flows to the first heat exchange unit 21 and the second heat exchange unit 22. The working medium absorbs heat and is vaporized at the first heat exchange unit 21 and the second heat exchange unit 22 separately, and becomes the low-temperature and low-pressure gaseous working medium and flows in from the air inlet of the compressor 11, so that the first heat exchange plate and the second heat exchange plate cool the battery.

Embodiment 4 is a working condition in which only the battery is cooled, and the first heat exchange unit 21 and the second heat exchange unit 22 operate in series.

In the working condition in which only the battery is cooled, the working medium flows in a working medium circuit formed by the compressor 11, the in-vehicle condenser 120, the out-vehicle condenser 130, and the battery heat exchange module. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 blocks the pipeline, and the switch valve 57 unblocks the series branch 10g.

A circulation path of the working medium is sequentially as follows: the working medium flows out from the compressor 11, passes through the first pressure sensor 81, the first temperature sensor 82, the in-vehicle condenser 120, the third on-off valve 53, the fifth on-off valve 55, the out-vehicle condenser 130, the fourth one-way valve 44, the second one-way valve 42, the first electronic expansion valve 61, the second sensor 32, the first heat exchange unit 21, the first sensor 31, the switch valve 57, the fourth sensor 34, the second heat exchange unit 22, the third sensor 33, the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61, and then flows to the first heat exchange unit 21 and the second heat exchange unit 22. The working medium absorbs heat and is vaporized at the first heat exchange unit 21 and the second heat exchange unit 22, and becomes the low-temperature and low-pressure gaseous working medium and flows in from the air inlet of the compressor 11, so that the first heat exchange plate and the second heat exchange plate cool the battery.

Embodiment 5 is a working condition in which the passenger compartment is cooled and the battery is cooled, and Embodiment 5 is actually a case that Embodiment 1 operates simultaneously with any one of Embodiment 2 to Embodiment 4.

Embodiment 6 is a working condition in which only the passenger compartment is heated. In addition, an environment outside the vehicle is high, so that the out-vehicle condenser 130 can absorb heat from the environment outside the vehicle.

In the working condition in which only the passenger compartment is heated, the working medium flows in a working medium circuit formed by the compressor 11, the in-vehicle condenser 120, and the out-vehicle condenser 130. In this case, the first on-off valve 51 blocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 unblocks the pipeline, and the sixth on-off valve 56 blocks the pipeline. The first electronic expansion valve 61 and the second electronic expansion valve 62 block the pipeline, the third electronic expansion valve 63 blocks the pipeline, and the fourth electronic expansion valve 64 unblocks the pipeline to play a throttling role.

A circulation path of the working medium is sequentially as follows: the working medium flows out from the compressor 11, passes through the first pressure sensor 81, the first temperature sensor 82, the in-vehicle condenser 120, the fourth electronic expansion valve 64, the fifth on-off valve 55, the out-vehicle condenser 130, the fourth one-way valve 44, the fourth on-off valve 54, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third exhaust flow channel 10e. The working medium is liquefied and releases heat at the in-vehicle condenser 120, then the working medium is throttled and depressurized by the fourth electronic expansion valve 64, and then flows to the out-vehicle condenser 130. The working medium exchanges heat with the environment outside the vehicle at the out-vehicle condenser 130, absorbs heat and is vaporized, and finally becomes a low-temperature and low-pressure gaseous working medium to flow in from the air inlet of the compressor 11 along the bypass flow path 10f, so that the in-vehicle condenser 120 heats the passenger compartment.

Embodiment 7 is a working condition in which only the passenger compartment is heated. In addition, the temperature of the environment outside the vehicle is low, so that the out-vehicle condenser 130 cannot absorb heat from the environment outside the vehicle.

In the working condition in which only the passenger compartment is heated, the working medium flows in a working medium circuit formed by the compressor 11, and the in-vehicle condenser 120. In this case, the first on-off valve 51 blocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 blocks the pipeline, and the sixth on-off valve 56 unblocks the pipeline. The first electronic expansion valve 61 and the second electronic expansion valve 62 block the pipeline, the third electronic expansion valve 63 blocks the pipeline, and the fourth electronic expansion valve 64 unblocks the pipeline to play a throttling role.

A circulation path of the working medium is sequentially as follows: the working medium flows out from the compressor 11, passes through the first pressure sensor 81, the first temperature sensor 82, the in-vehicle condenser 120, the fourth electronic expansion valve 64, the sixth on-off valve 56, the fourth on-off valve 54, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third exhaust flow channel 10e. The working medium is liquefied and releases heat at the in-vehicle condenser 120, then the working medium is throttled and depressurized by the fourth electronic expansion valve 64, and then flows to the bypass flow path 10f and flows in from the air inlet of the compressor 11, so that the in-vehicle condenser 120 heats the passenger compartment.

Embodiment 8 is a working condition in which only the battery is heated when the ambient temperature is high, and the first heat exchange unit 21 and the second heat exchange unit 22 operate separately. If the first heat exchange unit 21 operates, the second heat exchange unit 22 does not operate.

In the working condition in which only the battery is heated module, the working medium flows in a working medium circuit formed by the compressor 11, the first heat exchange unit 21, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 unblocks the pipeline to play a throttling role, the second electronic expansion valve 62 blocks the pipeline, the third electronic expansion valve 63 unblocks the pipeline to play a throttling role, and the fourth electronic expansion valve 64 blocks . The parallel switch valve 58 unblocks the pipeline, and the switch valve 57 blocks the series branch 10g.

A circulation path of the working medium is sequentially as follows: the working medium flows out from the compressor 11 and flows to the first branch through the first pressure sensor 81, the first temperature sensor 82, and the first on-off valve 51, and the working medium flowing to the first branch flows out from the first branch through the first sensor 31, the first heat exchange unit 21, the second sensor 32, and the first electronic expansion valve 61, passes through the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange unit 21, and then the working medium is throttled and depressurized through the first electronic expansion valve 61 and the third electronic expansion valve 63, and then flows to the evaporator 140. The working medium absorbs heat and is vaporized at the evaporator 140, and finally becomes a low-temperature and low-pressure gaseous working medium to flow in from the air inlet of the compressor 11, so that the first heat exchange plate and the second heat exchange plate heat the battery.

Embodiment 9 is a working condition in which only the battery is heated when the ambient temperature is high, and the first heat exchange unit 21 and the second heat exchange unit 22 operate in parallel.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 unblocks the pipeline to play a throttling role, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11 and flows to the first branch and the second branch through the first pressure sensor 81, the first temperature sensor 82, and the first on-off valve 51, and the working medium flowing to the first branch flows out from the first branch through the first sensor 31, the first heat exchange unit 21, the second sensor 32, and the first electronic expansion valve 61, and the working medium flowing to the second branch flows out from the second branch through the parallel switch valve 58, the third sensor 33, the second heat exchange unit 22, the fourth sensor 34, and the second electronic expansion valve 62, is mixed with the working medium flowing out from the first branch, then passes through the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange unit 21 and the second heat exchange unit 22 separately, and then the working medium is throttled and depressurized through the first electronic expansion valve 61, the second electronic expansion valve 62, and the third electronic expansion valve 63, and then flows to the evaporator 140. The working medium absorbs heat and is vaporized at the evaporator 140, and finally becomes a low-temperature and low-pressure gaseous working medium to flow in from the air inlet of the compressor 11, so that the first heat exchange plate and the second heat exchange plate heat the battery.

Embodiment 10 is a working condition in which only the battery is heated when the ambient temperature is high, and the first heat exchange unit 21 and the second heat exchange unit 22 operate in series.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 unblocks the pipeline to play a throttling role, and the fourth electronic expansion valve 64 blocks the pipeline. The parallel switch valve 58 connects blocks the pipeline, and the switch valve 57 unblocks the series branch 10g.

A circulation path of the working medium is sequentially as follows: the working medium flows out from the compressor 11, passes through the first pressure sensor 81, the first temperature sensor 82, the first on-off valve 51, the parallel switch valve 58, the third sensor 33, the second heat exchange unit 22, the fourth sensor 34, the first sensor 31, the first heat exchange unit 21, the second sensor 32, the first electronic expansion valve 61, the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange unit 21 and the second heat exchange unit 22, and then the working medium is throttled and depressurized through the first electronic expansion valve 61 and the third electronic expansion valve 63, and then flows to the evaporator 140. The working medium absorbs heat and is vaporized at the evaporator 140, and finally becomes a low-temperature and low-pressure gaseous working medium to flow in from the air inlet of the compressor 11, so that the first heat exchange plate and the second heat exchange plate heat the battery.

Embodiment 11 is a working condition in which only the battery is heated when the ambient temperature is low, and the first heat exchange unit 21 and the second heat exchange unit 22 operate in parallel.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11 and flows to the first branch and the second branch through the first pressure sensor 81, the first temperature sensor 82, and the first on-off valve 51, and the working medium flowing to the first branch flows out from the first branch through the first sensor 31, the first heat exchange unit 21, the second sensor 32, and the first electronic expansion valve 61, and the working medium flowing to the second branch flows out from the second branch through the parallel switch valve 58, the third sensor 33, the second heat exchange unit 22, the fourth sensor 34, and the second electronic expansion valve 62, is mixed with the working medium flowing out from the first branch, then passes through the first one-way valve 41, the sixth on-off valve 56, the fourth on-off valve 54, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange unit 21 and the second heat exchange unit 22 separately, and then the working medium is throttled and depressurized through the first electronic expansion valve 61, the second electronic expansion valve 62, and the third electronic expansion valve 63, and then flows to the compressor 11. However, the ambient temperature is low, the working medium naturally exchanges heat during flowing, and finally becomes a low-temperature and low-pressure gaseous working medium to flow in from the air inlet of the compressor 11, so that the first heat exchange plate and the second heat exchange plate heat the battery.

Embodiment 12 is a working condition in which the ambient temperature is relatively high and the passenger compartment and the battery pack are heated simultaneously. Embodiment 12 is actually a case that Embodiment 6 operates simultaneously with any one of Embodiment 8 to Embodiment 10.

The foregoing several embodiments are merely intended for ease of describing the present disclosure and simplifying the description, and are not intended to indicate or imply that the thermal management system 100 can only operate according to a case shown in an embodiment in a specific working condition. Therefore, the embodiments should not be construed as a limitation on the present disclosure.

In some embodiments of the present disclosure, the thermal management system further includes a power thermal management subsystem 200. The power thermal management subsystem 200 includes a fourth heat exchanger 71 and a coolant circulation system. The fourth heat exchanger 71 includes a first flow channel and a second flow channel, the first flow channel is connected to the coolant circulation system, and one end of the second flow channel communicates with at least one of the first trunk line 10a and the second trunk line 10b.

The air conditioning circulation circuit 101 further included in the thermal management system 100 further includes a heating branch. One of the first trunk line 10a and the second trunk line 10b communicates with the second flow channel. The other of the first trunk line 10a and the second trunk line 10b is connected in parallel to the heating branch. The controller is configured to control at least one of the heating branch, the first trunk line 10a, and the second trunk line 10b to exchange heat.

The coolant flows in the first flow channel, and the working medium flows in the second flow channel. The first flow channel and the second flow channel are co-located in the fourth heat exchanger 71, and the first flow channel and the second flow channel can exchange heat with each other. When the temperature of the coolant flowing in the second flow channel is higher than that of the working medium flowing in the first flow channel, the working medium flows through the fourth heat exchanger 71 to absorb heat. When the temperature of the coolant flowing in the second flow channel is lower than that of the working medium flowing in the first flow channel, the working medium flows through the fourth heat exchanger 71 to release heat.

The coolant circulation system may exchange heat with the working medium with heat generated by the power thermal management subsystem 200, thereby heating the working medium or cooling the working medium by using the heat generated by the power thermal management subsystem 200, to assist the battery heat exchange module in exchanging heat for the battery.

In some embodiments of the present disclosure, as shown in FIG. 2, the power thermal management subsystem 200 includes at least one of a high-pressure thermal management subsystem 201 and an engine thermal management subsystem 202.

The high-pressure thermal management subsystem 201 may exchange heat with the air conditioning circulation circuit 101, or the engine thermal management subsystem 202 exchanges heat with the air conditioning circulation circuit 101, or both the high-pressure thermal management subsystem 201 and the engine thermal management subsystem 202 exchange heat with the air conditioning circulation circuit 101.

In some specific embodiments of the present disclosure, the thermal management system further includes a high-pressure thermal management subsystem 201. The high-pressure thermal management subsystem 201 includes a fourth heat exchanger 71 and a coolant circulation system. The fourth heat exchanger 71 includes a first flow channel and a second flow channel. The first flow channel is connected to the coolant circulation system. One end of the second flow channel optionally communicates with the second end and the first heat exchanger 12. The other end of the second flow channel is connected to the fourth heat exchanger 71.

In some embodiments of the present disclosure, the high-pressure thermal management subsystem 201 further includes: a charging and power distribution/motor assembly 72 and a first heat spreader 73. The charging and power distribution/motor assembly 72 exchanges heat with a motor and an electric control of the vehicle, and the charging and power distribution/motor assembly 72 is connected between the coolant circulation system and the first heat spreader 73. The first heat spreader 73 is adapted to exchange heat with the environment outside the vehicle.

In some embodiments of the present disclosure, the high-pressure thermal management subsystem 201 further includes: a switching valve group 74. The switching valve group 74 is connected to two ends of a circulation circuit, the charging and power distribution/motor assembly 72 separately, and the first heat spreader 73. The switching valve group 74 operates to switch the high-pressure thermal management subsystem 201 between different working conditions. Specifically, the switching valve group 74 is a three-way valve.

The switching valve group 74 may control a flowing direction of the coolant, and the heat generated by the motor and the electric control of the vehicle may be used to heat the working medium, or the heat generated by the motor and the electric control of the vehicle may be dissipated to the outside of the vehicle through the first heat spreader 73.

In some embodiments of the present disclosure, the high-pressure thermal management system 100 further includes a water pump 75. The water pump 75 is arranged between the charging and power distribution/motor assembly 72 and the fourth heat exchanger 71. The water pump 75 is constructed to pump the coolant from the charging and power distribution/motor assembly 72 to the fourth heat exchanger 71.

The high-pressure thermal management subsystem 201 has a first working condition. In the first working condition, the charging and power distribution/motor assembly 72 and the second flow channel form a first circuit. The coolant flowing out from the charging and power distribution/motor assembly 72 flows to the fourth heat exchanger 71 under the action of the water pump 75. After exchanging, in the second flow channel of the fourth heat exchanger 71, heat with the working medium in the first flow channel, the coolant flows back to the charging and power distribution/motor assembly 72 to exchange heat with the motor and the electric control of the vehicle.

When the working medium circulation backflow has a heat absorption requirement and the high-pressure thermal management subsystem 201 has no heat dissipation requirement, the high-pressure thermal management subsystem 201 may operate according to the first working condition. The high-temperature coolant flowing out from the charging and power distribution/motor assembly 72 flows into the second flow channel and exchanges heat with the low-temperature working medium flowing through the first flow channel, to transfer the heat generated by the motor and the electric control of the vehicle to the working medium circulation backflow. The heat generated by the motor and the electric control of the vehicle is effectively used, thereby improving a heating capacity of the thermal management system 100 and reducing energy consumption of the thermal management system 100.

The high-pressure thermal management subsystem 201 further has a second working condition. In the second working condition, the charging and power distribution/motor assembly 72, the first heat spreader 73, and the second flow channel form a second circuit. The coolant flowing out from the charging and power distribution/motor assembly 72 flows to the fourth heat exchanger 71 under the action of the water pump 75. After exchanging, in the second flow channel of the fourth heat exchanger 71, heat with the working medium in the first flow channel, the coolant flows to the first heat spreader 73. After exchanging heat with the first heat spreader 73, the coolant flows back to the charging and power distribution/motor assembly 72 to exchange heat with the motor and the electric control of the vehicle.

When the working medium circulation backflow has a heat absorption requirement, the high-pressure thermal management subsystem 201 has a heat dissipation requirement, and the heat dissipation requirement of the high-pressure thermal management subsystem 201 is higher than the heat absorption requirement of the working medium circulation backflow, the high-pressure thermal management subsystem 201 may operate according to the second working condition. The high-temperature coolant flowing out from the charging and power distribution/motor assembly 72 flows into the second flow channel and exchanges heat with the low-temperature working medium flowing through the first flow channel, to transfer the heat generated by the motor and the electric control of the vehicle to the working medium circulation backflow. However, the temperature of the coolant is still high after one time of heat exchange. Therefore, the coolant flows to the first heat spreader 73 and exchanges heat with the environment outside the vehicle for the second time, to dissipate heat. The heat generated by the motor and the electric control of the vehicle is effectively used, thereby improving a heating capacity of the thermal management system 100 and reducing energy consumption of the thermal management system 100.

In addition, when the working medium circulation backflow has a heat absorption requirement, the heat generated by the high-pressure thermal management subsystem 201 is insufficient, and the temperature of the coolant is lower than the temperature of the environment outside the vehicle, the high-pressure thermal management subsystem 201 may also operate according to the second working condition. The coolant exchanges heat with the environment outside the vehicle at the first heat spreader 73, to increase the temperature of the coolant. The coolant then flows to the charging and power distribution/motor assembly 72 and the fourth heat exchanger 71 through the circulation circuit, and exchanges heat with the low-temperature working medium flowing through the first flow channel, to transfer heat from the environment outside the vehicle to the working medium circulation backflow and the high-pressure thermal management subsystem 201. The heat can be effectively used, thereby improving a heating capacity of the thermal management system 100 and reducing energy consumption of the thermal management system 100.

The high-pressure thermal management subsystem 201 further includes a mixed working condition. In the mixed working condition, circulation is performed in the first circuit and the second circuit simultaneously. The coolant flowing out from the charging and power distribution/motor assembly 72 flows to the third heat exchanger 14 under the action of the water pump 75. After exchanging, in the second flow channel of the third heat exchanger 14, heat with the working medium in the first flow channel, the coolant has one part directly flowing back to the charging and power distribution/motor assembly 72 to exchange heat with the motor and the electric control of the vehicle, and the other part flowing to the first heat spreader 73. After exchanging heat with the first heat spreader 73, the coolant flows back to the charging and power distribution/motor assembly 72 to exchange heat with the motor and the electric control of the vehicle.

When the working medium circulation backflow has a heat absorption requirement, the high-pressure thermal management subsystem 201 has a heat dissipation requirement, and the heat absorption requirement of the working medium circulation backflow is higher than the heat dissipation requirement of the high-pressure thermal management subsystem 201, the high-pressure thermal management subsystem 201 may operate according to the mixed working condition.

The high-temperature coolant flowing out from the charging and power distribution/motor assembly 72 flows into the second flow channel and exchanges heat with the low-temperature working medium flowing through the first flow channel, to transfer the heat generated by the motor and the electric control of the vehicle to the working medium circulation backflow. One part of the coolant that has exchanged heat flows back to the charging and power distribution/motor assembly 72, and the other part of the coolant flows to the first heat spreader 73 and exchanges heat with the environment outside the vehicle for the second time, to dissipate heat. The heat generated by the motor and the electric control of the vehicle is effectively used, thereby improving a heating capacity of the thermal management system 100 and reducing energy consumption of the thermal management system 100.

The high-pressure thermal management subsystem 201 has a first working condition, a second working condition, and a mixed working condition. In each of the first working condition, the second working condition, and the mixed working condition, the coolant in the circulation backflow heats the working medium in the working medium circulation backflow. Therefore, when working in different working conditions, the thermal management system 100 may further operate in conjunction with different working conditions of the high-pressure thermal management subsystem 201.

For example, when only the passenger compartment is heated, cooperation with the first working condition, the second working condition, and the mixed working condition of the high-pressure thermal management subsystem 201 may be made.

In some embodiments of the present disclosure, the thermal management system further includes an engine thermal management subsystem 202. The engine thermal management subsystem 202 includes a fifth heat exchanger 76 and a coolant circulation system. The fifth heat exchanger 76 includes a third flow channel and a fourth flow channel. The third flow channel is connected to the coolant circulation system. One end of the fourth flow channel optionally communicates with the second end b and the first heat exchanger 124. The other end of the fourth flow channel is connected to the third heat exchanger 1433.

In some embodiments of the present disclosure, the engine thermal management subsystem 202 further includes: an engine assembly 77 and a second heat spreader 78. The engine assembly 77 exchanges heat with the engine of the vehicle, and the engine assembly 77 is connected between the coolant circulation system and the second heat spreader 78. The second heat spreader 78 is adapted to exchange heat with the environment outside the vehicle.

A vehicle 1000 according to the embodiments of the present disclosure includes any thermal management system 100 described above.

In the vehicle 1000 according to the embodiments of the present disclosure, by arranging the foregoing thermal management system 100, the quantity of times of battery maintenance or replacement can be reduced, charging efficiency of the vehicle and convenience of use are improved, and a rationalized layout from the vehicle is facilitated.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example. Moreover, the specific features, structures, materials, or characteristics described may be combined in any one or more embodiments or examples in an appropriate manner.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A thermal management system, comprising:
a battery thermal management subsystem, the battery thermal management subsystem comprising a first trunk line (10a) and a second trunk line (10b), the first trunk line (10a) being configured to exchange heat with a first region of a battery, the second trunk line (10b) being configured to exchange heat with a second region of the battery, the first region and the second region being different, and at least one of the first trunk line (10a) and the second trunk line (10b) exchanging heat with the battery; and
a heat exchange unit, the heat exchange unit being arranged at the battery thermal management subsystem and a power thermal management subsystem (200), the battery thermal management subsystem and the power thermal management subsystem exchanging heat through the heat exchange unit, and the power thermal management subsystem being configured to dissipate heat for an electronic module.

2. The thermal management system according to claim 1, wherein a temperature of the first region is higher than a temperature of the second region; or a temperature rise rate of the first region is higher than a temperature rise rate of the second region; or the first region is an electrode region of the battery.

3. The thermal management system according to claim 1, wherein the heat exchange unit comprises at least one heat exchanger (70), each heat exchanger (70) comprises a first flow channel and a second flow channel that exchange heat with each other, the first flow channel is arranged in the power thermal management subsystem, and the second flow channel is connected to at least one of the first trunk line (10a) and the second trunk line (10b).

4. The thermal management system according to claim 1, the thermal management system further comprising a compressor (11) and an out-vehicle condenser (130), an exhaust port of the compressor being connected to a first end of the out-vehicle condenser, a second end of the out-vehicle condenser being connected to an air inlet of the compressor through the first trunk line (10a), and the second end of the out-vehicle condenser being connected to the air inlet of the compressor through the second trunk line (10b); and the exhaust port of the compressor being connected to the air inlet of the compressor through the first trunk line (10a), and the exhaust port of the compressor being connected to the air inlet of the compressor through the second trunk line (10b).

5. The thermal management system according to claim 4, wherein the first trunk line (10a) is provided with a first heat exchange unit (21), a first flow regulating element (61), and a second flow regulating element (65), the first flow regulating element (61) is connected to a first end of the first heat exchange unit (21), the second flow regulating element (65) is connected to a second end of the first heat exchange unit (21), and the first heat exchange unit (21) is configured to exchange heat with the first region; and
the second trunk line (10b) is provided with a second heat exchange unit (22), a third flow regulating element (62), and a fourth flow regulating element (66), the third flow regulating element (62) is connected to a first end of the second heat exchange unit (22), the fourth flow regulating element (66) is connected to a second end of the second heat exchange unit (22), and the second heat exchange unit (22) is configured to exchange heat with the second region.

6. The thermal management system according to claim 5, wherein an opening degree of at least one of the first flow regulating element (61), the second flow regulating element (65), the third flow regulating element (62), and the fourth flow regulating element (66) is different, to cause heat exchange amounts of the first trunk line (10a) and the second trunk line (10b) to be different.

7. The thermal management system according to claim 6, wherein when a temperature of the first region is higher than a temperature of the second region, a temperature difference is greater than or equal to a first threshold, and a cooling instruction is received, an opening degree of the first flow regulating element (61) is adjusted according to a superheating degree △TA of the second end of the first heat exchange unit (21), and an opening degree of the third flow regulating element (62) is reduced at set time intervals.

8. The thermal management system according to claim 7, wherein the opening degree of the first flow regulating element (61) is reduced when ΔTA < ΔTC; the opening degree of the first flow regulating element (61) is increased when ΔTA > ΔTD; or the first flow regulating element (61) maintains the current opening degree when △TD≤△TA≤△TC.

9. The thermal management system according to claim 5, wherein when a temperature of the first region is higher than a temperature of the second region, a temperature difference is greater than or equal to a first threshold, and a cooling instruction is received, opening degrees of the second flow regulating element (65) and the fourth flow regulating element (66) are maximum.

10. The thermal management system according to claim 6, wherein when a temperature of the first region is higher than a temperature of the second region, a temperature difference is greater than or equal to a second threshold, and a heating instruction is received, an opening degree of the fourth flow regulating element (66) is maximum, and an opening degree of the second flow regulating element (65) is reduced at set time intervals.

11. The thermal management system according to claim 10, wherein when a temperature of the first region is higher than a temperature of the second region, a temperature difference is greater than or equal to a second threshold, and a heating instruction is received, an opening degree of the first flow regulating element (61) is adjusted according to a supercooling degree ΔT1 of the first end of the first heat exchange unit (21), and an opening degree of the third flow regulating element (62) is adjusted according to a supercooling degree ΔT2 of the first end of the second heat exchange unit (22).

12. The thermal management system according to claim 11, wherein the opening degree of the first flow regulating element (61) is reduced when △T1<△T3; the opening degree of the first flow regulating element (61) is increased when ΔTA > ΔT4; or the first flow regulating element (61) maintains the current opening degree when △T4≤△TA≤△T3; and
the opening degree of the third flow regulating element (62) is reduced when △T2<△T5; the opening degree of the third flow regulating element (62) is increased when △T2<△T6; or the third flow regulating element (62) maintains the current opening degree when △T6≤△T2≤△T5.

13. The thermal management system according to any one of claims 1 to 12, wherein the power thermal management subsystem (200) comprises at least one of a high-pressure thermal management subsystem (201) and an engine thermal management subsystem (202), the high-pressure thermal management subsystem (201) is configured to perform heat exchange for a motor and/or an electric control, and the engine thermal management subsystem (202) is configured to perform heat exchange for an engine.

14. The thermal management system according to claim 13, wherein the high-pressure thermal management subsystem comprises a first heat spreader (73), and the first heat spreader and the heat exchange unit are connected to form a first coolant circuit; and/or
the engine thermal management subsystem comprises a second heat spreader (78), and the second heat spreader and the heat exchange unit are connected to form a second coolant circuit.

15. The thermal management system according to any one of claims 1 to 14, further comprising an air conditioning subsystem, the air conditioning subsystem comprising a compressor, an in-vehicle condenser, an out-vehicle condenser, and an evaporator, an exhaust port of the compressor being connected to a first end of the in-vehicle condenser, a second end of the in-vehicle condenser being connected to a first end of the out-vehicle condenser, and two ends of the evaporator being respectively connected to a second end of the out-vehicle condenser and an air inlet of the compressor; and
the first trunk line (10a) and the second trunk line (10b) being connected in parallel, and the first trunk line (10a) being connected between the second end of the out-vehicle condenser and the air inlet.

16. Avehicle, comprising the thermal management system according to any one of claims 1 to 15.
